(19) Europäisches Patentamt European Patent Office Office européen des brevets

(11) **EP 4 332 655 A1**

(12) **EUROPEAN PATENT APPLICATION**
published in accordance with Art. 153(4) EPC

(43) Date of publication:
06.03.2024 Bulletin 2024/10

(21) Application number: 22796091.1

(22) Date of filing: 26.04.2022

(51) International Patent Classification (IPC):
$G02B\ 15/14^{(2006.01)}$    $G02B\ 13/00^{(2006.01)}$
$G02B\ 3/00^{(2006.01)}$    $G02B\ 9/60^{(2006.01)}$
$G03B\ 17/12^{(2021.01)}$    $H04N\ 5/225^{(2006.01)}$

(52) Cooperative Patent Classification (CPC):
G02B 3/00; G02B 9/60; G02B 13/00; G02B 15/14;
G03B 17/12; H04N 23/00

(86) International application number:
PCT/KR2022/005918

(87) International publication number:
WO 2022/231258 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.04.2021 KR 20210054346

(71) Applicant: LG Innotek Co., Ltd.
Seoul 07796 (KR)

(72) Inventor: MOON, Sung Min
Seoul 07796 (KR)

(74) Representative: M. Zardi & Co S.A.
Via G. B. Pioda, 6
6900 Lugano (CH)

(54) **OPTICAL SYSTEM AND CAMERA MODULE COMPRISING SAME**

(57) According to an embodiment of the present invention, disclosed is an optical system comprising: a first lens group and a second lens group which are sequentially arranged from an object side to an image side, wherein the first lens group includes first to third lenses which are sequentially arranged from the object side to the image side, the second lens group includes a fourth lens and a fifth lens which are sequentially arranged from the object side to the image side, the fourth lens has both faces which are convex toward the object side, and the fifth lens has both faces which are concave toward the object side.

[FIG. 1]

10A

EP 4 332 655 A1

**Description**

[Technical Field]

Embodiments relate to an optical system and a camera module including the same.

[Background Art]

A camera module performs a function of photographing an object and storing an image or a video of the object and is applied to various applications. In particular, the camera module is manufactured in an ultra-small size and applied to not only portable devices such as a smartphone, a tablet PC, and a laptop computer, but also drones, vehicles, or the like to provide various functions.

For example, an optical system of a camera module may include an imaging lens for forming an image and an image sensor for converting the formed image into an electrical signal. In this case, the camera module may perform an auto focus (AF) function of aligning a focal length of a lens by automatically adjusting a distance between the image sensor and the imaging lens and perform a zooming function, such as zoom in and zoom out functions, of photographing a distant object by increasing or decreasing magnification for the distant object through a zoom lens. In addition, the camera module adopts a technology of correcting or preventing shaking of an image due to the movement of a camera caused by an unstable fixing device or a user's movement.

The most important factor for obtaining an image from such a camera module is an imaging lens for forming an image. Recently, interest in high performance, such as high image quality and high resolution, is increasing, and in order to realize this, research on an optical system including a plurality of lenses is being conducted.

For example, in order to implement a high-performance optical system, research using a plurality of imaging lenses having positive (+) or negative (-) refractive power is being conducted. However, when the plurality of lenses are used, the size of the entire optical system may increase, and it is difficult to derive excellent optical characteristics and aberration characteristics.

In addition, the optical system including the plurality of lenses may have a relatively larger height. For example, as the number of lenses increases, a distance from the image sensor to an object surface of the lens adjacent to the object may increase. Therefore, there is a problem in that the entire thickness and length of a device such as a smartphone in which an optical system is disposed may increase and it is difficult to miniaturize the device.

In addition, there is a problem in that it is difficult to improve optical performance by the lens.

[Technical Problem]

The present invention is directed to providing an optical system whose length is reduced through an optical member having a reflecting surface or a prism lens having a transmitting surface and a reflecting surface, or a camera module or an electronic device including the optical system.

In addition, the present invention is directed to providing an optical system in which a ghost phenomenon of light passing through a lens is suppressed through shapes of a fourth lens and a fifth lens or a camera module including the same.

In addition, the present invention is directed to providing a compact optical system and a camera module including the same.

In addition, an embodiment of the present invention is directed to providing an optical system in which degradation in a resolution is suppressed by adjusting the refractive power of a lens, and a camera module including the same.

The object of embodiments is not limited thereto and may also include objects or effects that may be identified from the configurations or embodiments to be described below.

[Technical Solution]

An optical system according to an embodiment of the present disclosure includes a first lens group and a second lens group sequentially disposed from an object side to an image side, wherein the first lens group includes a first lens to a third lens, the second lens group includes a fourth lens and a fifth lens, the first lens is closest to the object side and has a concave object side surface, and the fifth lens is closest to the image side and has a convex image side surface.

The fourth lens may have a convex object side surface and a concave image side surface.

A distance on an optical axis between a lens of the first lens group, which is closest to the image side, and a lens of the second lens group, which is closest to the object side, may be the largest.

An optical system according to an embodiment includes a first lens to a fifth lens sequentially disposed from an object side to an image side, wherein the first lens is closest to the object side and has a concave object side surface, the fifth lens is closest to the image side and has a convex image side surface, and a distance between the third lens and the fourth lens based on an optical axis is the largest.

An optical system according to an embodiment includes a first lens to a fifth lens sequentially disposed from an object side to an image side, wherein the first lens is closest to the object side and has a concave object side surface, the fifth lens is closest to the image side and has a convex image side surface, and the fourth lens has a convex object side surface and a concave image side surface.

An optical system according to an embodiment includes a first lens to a fifth lens sequentially disposed from an object side to an image side, wherein the first lens and the second lens have positive refractive power, the third lens has negative refractive power, the fourth lens and the fifth lens have positive refractive power, the first lens is closest to the object side, and the fifth lens is closest to the image side.

A distance between the third lens and the fourth lens based on an optical axis may be the largest among distances between other lenses closest to each other, and the fourth lens may be disposed on the image side of the third lens and may be closest to the third lens.

A camera module according to an embodiment includes the above-described optical system, and an image sensor disposed at a rear end of the fifth lens.

The camera module may include a filter disposed between the fifth lens and the image sensor.

The camera module may include a dummy member disposed between the fifth lens and the filter.

The camera module may include a reflective member disposed in front of the first lens.

An optical system according to an embodiment includes a first lens group and a second lens group sequentially disposed from an object side to an image side, wherein the first lens group includes a first lens to a third lens sequentially disposed from the object side to the image side, the second lens group includes a fourth lens and a fifth lens sequentially disposed from the object side to the image side, the first lens has an object side surface concave to the object side, the fourth lens has a convex object side surface and a concave image side surface, and the fifth lens has a convex image side surface.

A center thickness of the fifth lens may be larger than a distance between the fourth lens and the fifth lens.

The fifth lens may have an absolute value of a radius of curvature of the image side surface that is larger than an absolute value of a radius of curvature of an object side surface.

An Abbe's number of the fifth lens may be larger than 24.

A focal length of the first lens may be larger than a focal length of the fifth lens.

A focal length of the fourth lens may be larger than a focal length of the fifth lens.

The fifth lens may have a concave object side surface.

A distance on an optical axis between an image side surface of the third lens and an object side surface of the fourth lens may be larger than the sum of a thickness on the optical axis of the fourth lens and a thickness on the optical axis of the fifth lens.

A distance on an optical axis between an image side surface of the third lens and an object side surface of the fourth lens may be larger than a half of a difference between a size of the third lens and a size of the fourth lens in a direction perpendicular to the optical axis.

A distance on an optical axis between an image side surface of the third lens and an object side surface of the fourth lens may be larger than the sum of a thickness on the optical axis of the fourth lens and a thickness on the optical axis of the fifth lens.

The second lens may have an object side surface convex to an object side.

An Abbe's number of the fourth lens may be larger than 50.

An effective focal length (EFL) by the first lens to the fifth lens may be in a range of 7 mm to 35 mm.

It is possible to satisfy Expression 1 below.

$$[\text{Expression 1}]$$

$$0.55 < \text{LnS2 C.A} / \text{L1S1 C.A} < 1$$

(Here, LnS2 C.A denotes a clear aperture of an image side surface of any one of the first lens to the fifth lens, and L1S1 C.A denotes a clear aperture of an object side surface of the first lens).

It is possible to satisfy Expression 2 below.

[Expression 2]

$$0.15 < TH\_L1 / TH\_L2 < 0.55$$

(Here, TH_L1 denotes a center thickness of the first lens, and TH_L2 denotes a center thickness of the second lens).

It is possible to satisfy Expression 3 below.

[Expression 3]

$$0.5 < L1S1\ C.A / I.H < 0.9$$

(Here, L1S1 C.A denotes a clear aperture of the object side surface of the first lens, and I.H denotes a value of 1/2 a diagonal length (mm) of an effective region of the image sensor).

At least one of the first lens, the second lens, and the third lens may have a maximum length in a first direction that is larger than a maximum length in a second direction.

The first lens, the second lens, and the third lens may have the same maximum length in the second direction.

A separation distance between the first lens group and the second lens group may be the largest among separation distances between adjacent lenses among the first lens to the fifth lens.

The optical system may further include a diaphragm disposed between the first lens group and the second lens group.

It is possible to satisfy Expression 4 below.

[Expression 4]

$$0.5 < f/f1$$

(Here, f denotes the focal length of the optical system, and f1 denotes the focal length of the first lens).

An Abbe's number of the fifth lens may be larger than 24.

The first lens may have an image side surface concave toward the object side and have positive refractive power.

The second lens may have an image side surface convex to the object side and have positive refractive power.

The third lens may have both side surfaces convex to the object side and have negative refractive power.

The fourth lens may have positive refractive power, and the fifth lens may have positive refractive power.

At least one of the fourth lens and the fifth lens may have an inflection point on an object side surface.

The optical system may further include an optical member disposed at a front end of the first lens and including an inclined surface with respect to an optical axis, wherein the optical member may include a mirror or a prism.

[Advantageous Effects]

According to an embodiment of the present invention, it is possible to implement an optical system whose length is reduced through an optical member having a reflecting surface or a prism lens having a transmitting surface and a reflecting surface, or a camera module or an electronic device including the optical system.

In addition, it is possible to implement an optical system in which a ghost phenomenon of light passing through a lens is suppressed through shapes of a fourth lens and a fifth lens or a camera module including the same.

In addition, according to an embodiment of the present invention, it is possible to implement a small and compact optical system and a camera module including the same.

In addition, according to an embodiment of the present invention, it is possible to implement an optical system in which degradation in a resolution is suppressed by adjusting the refractive power of a lens, and a camera module including the same.

Various and beneficial advantages and effects of the present invention are not limited to the above-described contents and will be more readily understood in a process of describing specific embodiments of the present invention.

[Description of Drawings]

FIG. 1 is a cross-sectional view of an optical system according to one embodiment of the present invention.

FIG. 2 is a perspective view of a camera module according to an embodiment.

FIG. 3 is a cross-sectional view of the camera module taken along line A-A' in FIG. 2.

FIG. 4 is a view for describing a lens having a non-circular shape among lenses of the optical system according to the embodiment.

FIG. 5 is a graph showing measured data of a longitudinal spherical aberration for light with wavelengths of 435 nm, 486 nm, 546 nm, 587 nm, and 656 nm, an astigmatic field curve for light with a wavelength of 546 nm, and a distortion for light with a wavelength of 546 nm of the optical system according to one embodiment.

FIG. 6 shows a result of ghost simulation of a comparative example.

FIG. 7 shows a result of ghost simulation of one embodiment.

FIG. 8 is a cross-sectional view of an optical system according to a modified example.

FIG. 9 is a cross-sectional view of an optical system according to another embodiment of the present invention.

FIG. 10 is a graph showing measured data of a longitudinal spherical aberration for light with wavelengths of 435 nm, 486 nm, 546 nm, 587 nm, and 656 nm, an astigmatic field curve for light with a wavelength of 546 nm, and a distortion for light with a wavelength of 546 nm of the optical system according to another embodiment.

FIG. 11 shows an example of a camera module having the optical system according to the embodiment of the present invention.

[Modes of the Invention]

Hereinafter, exemplary embodiments of the present invention will be described in detail with reference to the accompanying drawings.

However, the technical spirit of the present invention is not limited to some embodiments to be described but may be implemented in various different forms, and one or more components in the embodiments may be selectively coupled to and substituted with each other as long as the one or more components are within the scope of the technical spirit of the present invention.

In addition, terms (including technical and scientific terms) used in the embodiments of the present invention may be construed as the meaning that can be generally understood by those skilled in the art to which the present invention pertains unless explicitly specifically defined and described, and the meaning of commonly used terms, such as terms defined in a dictionary, may be construed in consideration of contextual meanings of related technologies.

In addition, the terms used in the embodiments of the present invention are to describe the embodiments and are not intended to limit the present invention.

In the specification, the singular form may also include the plural form unless otherwise specified in the phrase, and when described as "at least one (or one or more) of A, B, and C," this may include one or more of all possible combinations of A, B, and C.

In addition, terms such as first, second, A, B, (a), and (b) may be used to describe the components of the embodiments of the present invention.

These terms are only used to distinguish the component from another component, and the nature, order, sequence, and the like of the corresponding component are not limited by the terms.

In addition, when a first component is described as being "connected," "coupled," or "joined" to a second component, the certain component may include not only a case of being directly connected, coupled, or connected to the second component, but also a case of being "connected," "coupled," or "joined" with a third component interposed between the first component and the second component.

In addition, when a first component is described as being formed or disposed on "top (above) or bottom (below)" of a second component, the top (above) or bottom (below) includes not only a case in which two components are in direct contact with each other but also a case in which one or more other components are formed or disposed between the two components. In addition, when expressed as "top (above) or bottom (below)," this may also include the meaning of not only an upward direction but also a downward direction with respect to one component.

In addition, a convex lens surface may mean that a lens surface in a region corresponding to an optical axis has a convex shape, and a concave lens surface means that the lens surface in the region corresponding to the optical axis has a concave shape.

Furthermore, a configuration in which the lens surface is convex to an object side corresponds to a configuration in which the lens surface is concave toward an image side, and a configuration in which the lens surface is convex to the image side corresponds to a configuration in which the lens surface is concave to the object side. Hereinafter, a shape that is convex or concave toward the image side will be described.

In addition, for example, when the lens surface is concave to the object side, the lens surface ("adjacent surface") in a region corresponding to an optical axis may be closer to the image side than a surrounding surface (or at least a portion) of the adjacent surface is. Conversely, when the lens surface is convex to the object side, the adjacent surface may be closer to the object side than the surrounding surface (or at least a portion) of the adjacent surface is.

In addition, "object side surface" may mean a surface of a lens facing the object side based on an optical axis, and "image side surface" may mean a surface of a lens facing an imaging surface (image sensor) based on the optical axis. Furthermore, "image side surface" may mean a side (direction or side) on which an image is formed or a side (direction or side) facing the image.

In addition, the optical axis or an optical axis direction may be a direction in which light is incident on an image sensor after passing through a first lens or the like in the embodiment. Hereinafter, the optical axis or the optical axis direction is used interchangeably with "third direction," "third axis direction," "third axis," or "Z-axis direction."

In addition, a first direction is a direction perpendicular to the optical axis direction (Z-axis direction) and is used interchangeably with "first axis direction," "first axis," or "Y axis direction." In addition, a second direction is a direction perpendicular to the optical axis direction (Z-axis direction) and the first direction (Y-axis direction) and is used interchangeably with "second axis direction," "second direction," or "X-axis direction." Furthermore, the second direction (X-axis direction) may correspond to a thickness direction of a portable phone device. In addition, the second direction (X-axis direction) may be a direction in which surfaces on which D-cut is applied to the lens face each other. In addition, the second direction (X-axis direction) may correspond to an incident direction of light incident on a reflecting surface of an optical member to be described below.

In addition, an end of the lens or the lens surface may be an end of an effective region of the lens through which incident light passes. In addition, a center thickness of the lens may be a length or thickness in an optical axis direction of a region of the lens overlapping the optical axis. Therefore, an effective diameter may be referred to as "clear aperture" or "effective diameter" or may mean "effective radius." For example, "effective radius" may be a radial distance between ends of the optical axis on which light is incident, and "effective diameter" or "clear aperture" may be a diameter that is twice the radial distance between the ends of the optical axis on which light is incident.

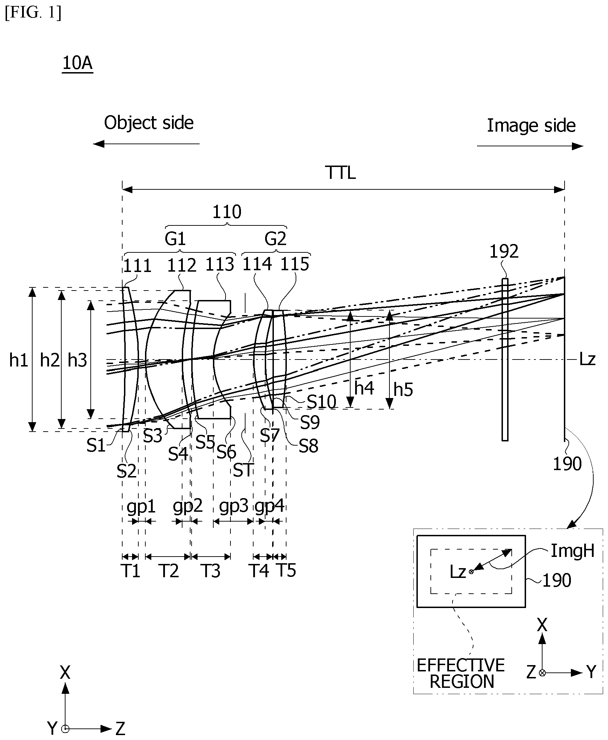

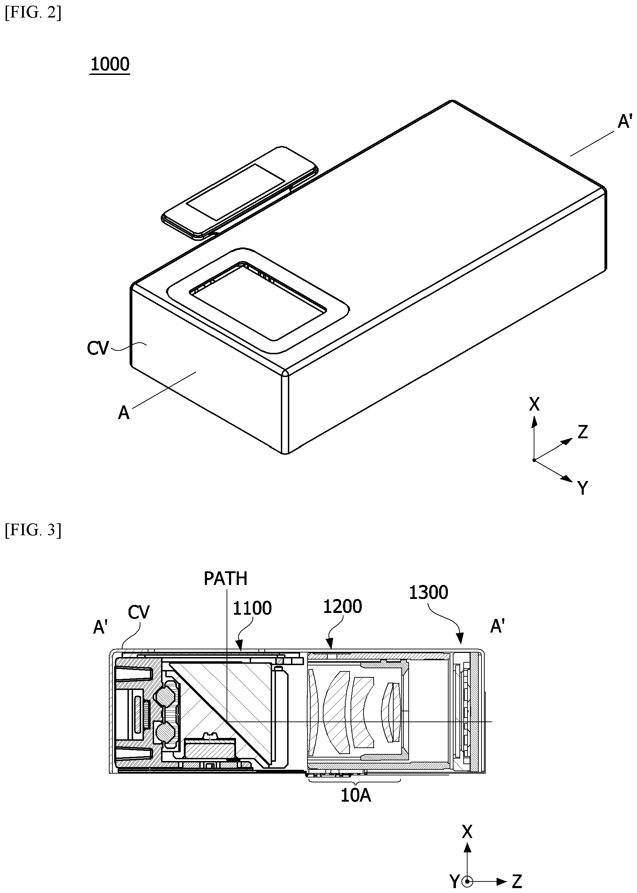

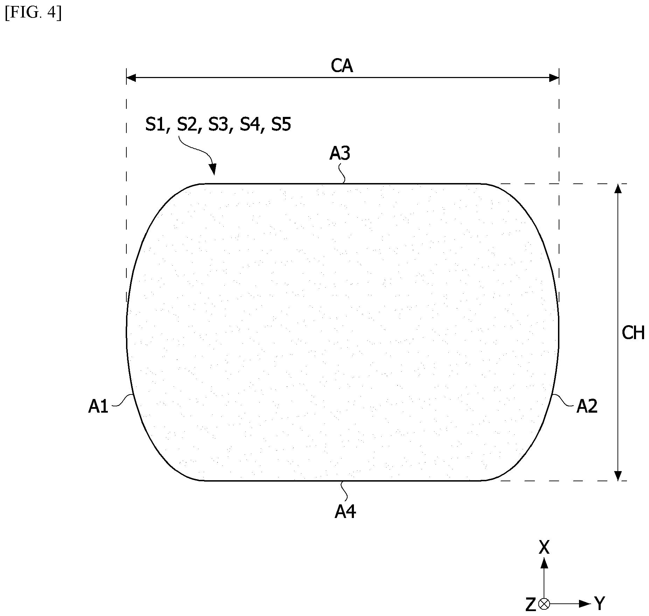

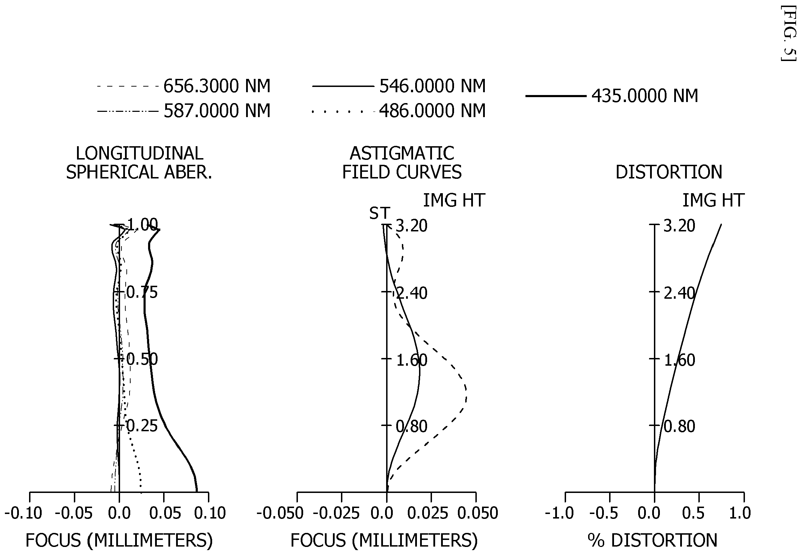

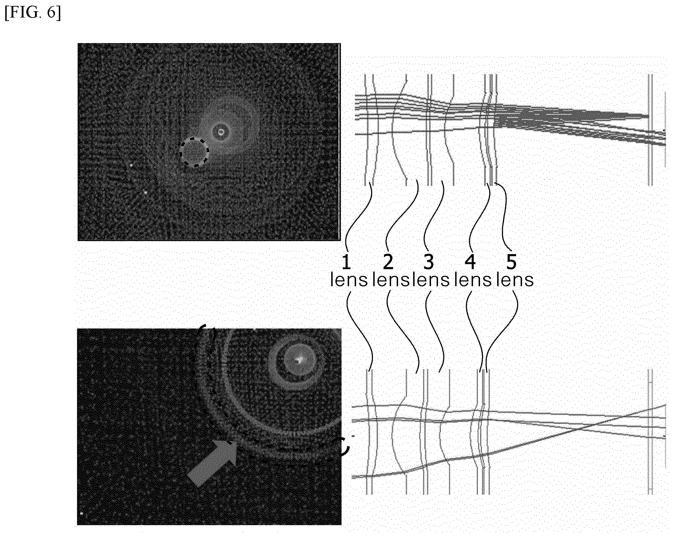

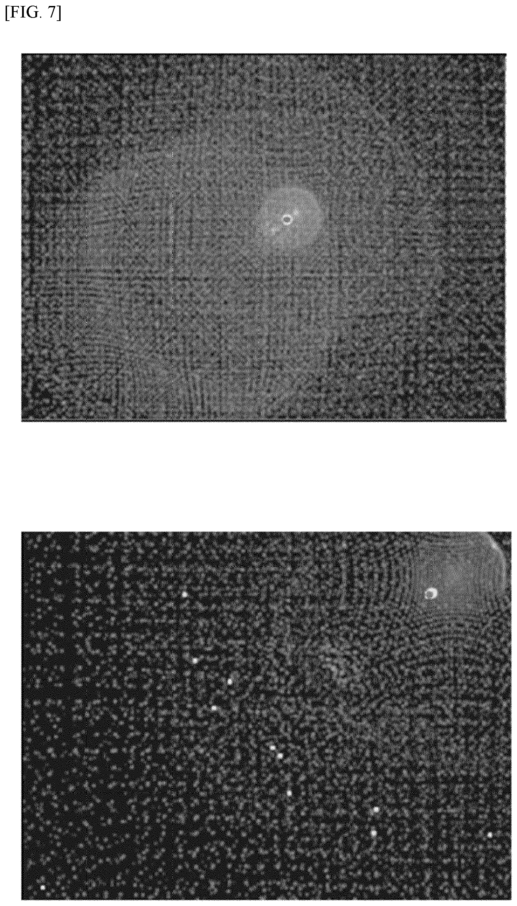

FIG. 1 is a cross-sectional view of an optical system according to one embodiment of the present invention, FIG. 2 is a perspective view of a camera module according to an embodiment, FIG. 3 is a cross-sectional view of the camera module taken along line A-A' in FIG. 2, FIG. 4 is a view for describing a lens having a non-circular shape among lenses of the optical system according to the embodiment, FIG. 5 is a graph showing measured data of a longitudinal spherical aberration for light with wavelengths of 435 nm, 486 nm, 546 nm, 587 nm, and 656 nm, an astigmatic field curve for light with a wavelength of 546 nm, and distortion for light with a wavelength of 546 nm of the optical system according to one embodiment, FIG. 6 shows a result of ghost simulation of a comparative example, and FIG. 7 shows a result of ghost simulation of one embodiment.

Referring to FIG. 1, an optical system 10A according to one embodiment may include a lens unit 110 having a plurality of lenses sequentially disposed from an object side to an image side, a filter 192, and an image sensor 190. The lens unit 110 may include 5 or more lenses, for example, 5 lenses.

Further referring to FIGS. 2 and 3, the optical system 10A according to the embodiment of the present invention may be disposed within a camera module 1000. The camera module 1000 according to the embodiment may include a cover CV, a first camera actuator 1100, a second camera actuator 1200, and a circuit board 1300.

Here, the first camera actuator 1100 may be used interchangeably with "first actuator," and the second camera actuator 1200 may be used interchangeably with "second actuator." Furthermore, the first camera actuator may be referred to as "first camera assembly," "first camera apparatus," "first camera device," "first lens moving apparatus," etc. In addition, the second camera actuator may be referred to as "second camera assembly," "second camera apparatus," "second camera device," "second lens moving apparatus," etc.

The cover CV may cover the first camera actuator 1100 and the second camera actuator 1200. It is possible to increase a coupling strength between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator. For example, the first camera actuator 1100 may move an optical member in a direction perpendicular to an optical axis.

The first camera actuator 1100 may change an optical path. In the embodiment, the first camera actuator 1100 may change an optical path through an internal optical member (e.g., including various reflective members such as a prism or a mirror) at a predetermined angle (e.g., right angle), along a predetermined path, or in a predetermined direction. With this configuration, even when a thickness of a mobile terminal decreases, a configuration of a lens that is larger than the thickness of the mobile terminal is disposed in the mobile terminal through the change in the optical path so that magnification, auto focusing (AF), and OIS functions may be performed.

However, the present invention is not limited thereto, and the first camera actuator 1100 may change the optical path vertically or at a predetermined angle multiple times. Therefore, a plurality of reflective members may be positioned in the camera module.

The second camera actuator 1200 may be disposed at a rear end of the first camera actuator 1100. The second camera actuator 1200 may be coupled to the first camera actuator 1100. In addition, mutual coupling may be performed by various methods.

In addition, the second camera actuator 1200 may be a zoom actuator or an AF actuator. For example, the second camera actuator 1200 may support one or more lenses and perform an AF function or a zooming function by moving the lenses according to a predetermined control signal of a control unit. Alternatively, the second camera actuator 1200 may be formed of a fixed lens. Therefore, the second camera actuator 1200 may provide a fixed zoom. In the embodiment, an optical system according to various embodiments described herein may be disposed in the second camera actuator 1200. For example, the optical system 10A according to the embodiment may be positioned in the second camera actuator 1200.

In addition, one lens or a plurality of lens may independently or separately move in an optical axis direction. However, the optical system 10A according to one embodiment of the specification may be fixed within the second camera actuator 1200.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided. The circuit board 1300 may include an image sensor and the like and may include a connector electrically connected to another external camera module or a processor of a terminal.

A camera module according to the embodiment may be formed of one camera module or a plurality of camera modules. For example, the plurality of camera modules may include a first camera module and a second camera module.

In addition, the first camera module may include one actuator or a plurality of actuators. For example, the first camera module may include the first camera actuator 1100 and the second camera actuator 1200.

In addition, the second camera module may include an actuator (not illustrated) disposed in a predetermined housing (not illustrated) and configured to drive a lens unit. The actuator may be a voice coil motor, a micro actuator, a silicon actuator, and the like and applied in various methods such as an electrostatic method, a thermal method, a bimorph method, and an electrostatic force method, but the present invention is not limited thereto. In addition, in the specification, the camera actuator may be referred to as "actuator," etc. In addition, the camera module formed of the plurality of camera modules may be mounted on various electronic devices such as a mobile terminal.

In addition, as will be described below in the optical system according to the embodiment, an optical member may be disposed at a front end of the optical system. In this case, the optical member may be positioned within the first camera actuator 1100, and the lens unit 110 may be positioned within the second camera actuator 1200. For example, the lens unit 110 may be fixed within the second camera actuator 1200. For example, the lens unit 110 may be disposed in a fixed group in the second camera actuator 1200. Alternatively, in the second camera actuator 1200, the lens unit 110 may be disposed in a moving group for zooming or auto focusing. In other words, the lens unit 110 may move along the optical axis as a moving unit. Alternatively, the optical system may be positioned within the first camera actuator 1100 or the second camera actuator 1200. Furthermore, the camera module 1000 may include all optical systems according to other embodiments below. Hereinafter, the optical system according to the embodiment will be described. In addition, in the specification, a clear aperture may correspond to a size or area of the above-described effective region.

The optical system 10A according to one embodiment may be formed of the lens unit 110 including a first lens group G1 and a second lens group G2 sequentially disposed along an optical axis Lz from the object side to the image side. Furthermore, the optical system 10A may further include the filter 192 and the image sensor 190 sequentially disposed along the optical axis Lz from the object side to the image side. For example, the object side is a side or direction in which light is incident on the camera module. In addition, the image side may be a side or direction toward the image sensor of the camera module.

In addition, the first lens group G1 may include a first lens 111, a second lens 112, and a third lens 113 sequentially disposed along the optical axis Lz from the object side to the image side. In addition, the second lens group G2 may include a fourth lens 114 and a fifth lens 115 sequentially disposed along the optical axis Lz from the object side to the image side. Therefore, in the embodiment, in the optical system 10A, the first lens 111, the second lens 112, the third lens 113, the fourth lens 114, and the fifth lens 115 may be sequentially disposed along the optical axis Lz from the object side to the image side. In addition, the first lens 111 may be closest to or adjacent to an object. In addition, the fifth lens 115 may be closest to or adjacent to an image.

The first lens to the fifth lens 111, 112, 113, 114, and 115 may be sequentially disposed along the optical axis Lz. The first lens 111 may be disposed closest to the object among the plurality of lenses 111, 112, 113, 114, and 115, and the fifth lens 115 may be disposed closest to the filter 192 or the image sensor 190.

In addition, in the lens unit 110 according to the embodiment, a distance gp3 between the first lens group G1 and the second lens group G2 may be larger than distances gp1, gp2, and gp4 between lenses in each of the lens groups G1 and G2. Alternatively, a distance on the optical axis between the lens (e.g., the third lens) closest to the image of the first lens group G1 and the lens (e.g., the fourth lens) closest to the object of the second lens group G2 may be the largest in the lens unit 110. In other words, the first lens group G1 and the second lens group G2 may be set based on lenses having the largest separation distance between the lenses. For example, the distances gp1 and gp2 between adjacent lenses among the first lens 111 to the third lens 113 and the distance gp4 between the fourth lens 114 and the fifth lens 115 may be smaller than the distance gp3 between the third lens 113 and the fourth lens 114.

In addition, the distance between the third lens 113 and the fourth lens 1140 based on the optical axis may be larger than a distance between other lenses closest to each other. In addition, the fourth lens 114 may be disposed on the image side of the third lens 113 and closest to the third lens. In addition, another lens may not be disposed between the third lens and the fourth lens. The fourth lens 114 may be disposed on the image side of the third lens 113 and closest to the third lens 113. In addition, a distance on the optical axis between an image side surface of the third lens 113 and an object side surface of the fourth lens 114 may be larger than a length on the optical axis between the object side surface of the fourth lens 114 and an image side surface of the fifth lens 115.

In addition, the distance gp3 on the optical axis between the image side surface of the third lens 113 and the object side surface of the fourth lens 114 may be larger than a difference between a size of the third lens 113 and a size of the fourth lens 114 in a direction (e.g., a second direction) perpendicular to the optical axis. In the specification, the surface of the object side may mean the object side surface.

In the embodiment, the distance gp1 between the first lens 111 and the second lens 112 may be the smallest in the lens unit 110. In other words, the distance gp1 between the first lens 111 and the second lens 112 may be the smallest among distances between adjacent lenses.

In addition, in the lens unit 110 according to the embodiment, the first lens group G1 and the second lens group G2 may be set based on whether a non-circular shape or a D-cut shape is applied thereto. In the embodiment, the non-circular shape or the D-cut shape may be applied to the first lens group G1. Therefore, a maximum length in the second direction (X-axis direction) may be smaller than a minimum length in a first direction (Y-axis direction) in at least one of the first lens 111 to the third lens 113 of the first lens group G1. With this configuration, since thicknesses of the optical system 10A and the camera module including the optical system 10A in the second (X-axis direction) decrease, it is possible to easily decrease the thickness of the camera module or the electronic device.

Furthermore, lengths h1, h2, and h3 of the first lens group G1 in the second direction (X-axis direction) may be larger than lengths h4 and h5 of the second lens group G2 in the second direction (X-axis direction). In other words, the first lens group G1 may have a larger size than the second lens group G2. Therefore, since the thickness of the first lens group G1 is decreased by applying a non-circular shape to the first lens group G1, it is possible to easily decrease the thickness of the camera module or the electronic device.

In addition, each of the first lens 111 to the fifth lens 115 may include an effective region and a non-effective region. The effective region may be a region through which light incident on each of the lenses 111, 112, 113, 114, and 115 passes. In other words, the effective region may be a region in which the incident light is refracted to implement optical characteristics. The non-effective region may be disposed on a portion or around the effective region. The non-effective region may be a region in which no light is incident. In other words, the non-effective region may be a region unrelated to optical characteristics. In addition, the non-effective region may be a region fixed to a barrel (not illustrated) accommodating the lenses 111, 112, 113, 114, and 115. Furthermore, in each of the lenses 111, 112, 113, 114, and 115, the non-effective region may have a length in the first direction (Y-axis direction) larger than a length in the second direction (X-axis direction).

In addition, in the first lens group G1 and the second lens group G2, the first lens to the fifth lens 111, 112, 113, 114, and 115 may be serially disposed along the optical axis Lz. As described above, the first lens to the third lens 111, 112, and 113 may be combined into the first lens group, and the fourth lens 114 and the fifth lens 115 may be combined into the second lens group.

In addition, the first lens to the fifth lens 111, 112, 113, 114, and 115 may include object side surfaces S1, S3, S5, S7, and S9 and image side surfaces S2, S4, S6, S8, and S10, respectively. For example, the first lens 111 may include the object side surface S1 and the image side surface S2, the second lens 112 may include the object side surface S3 and the image side surface S4, the third lens 113 may include the object side surface S5 and the image side surface S6, the fourth lens 114 may include the object side surface S7 and the image side surface S8, and the fifth lens 115 may include the object side surface S9 and the image side surface S10. The object side surfaces and the image side surfaces of each lens are a first surface to a tenth surface to be described below and will be described by being used interchangeably.

In the embodiment, the first lens to the fifth lens 111, 112, 113, 114, and 115 may have positive or negative refractive power. Furthermore, in the specification, in the embodiment, the first lens 111 may have the positive refractive power. The second lens 112 may have the positive refractive power. The third lens 113 may have the negative refractive power. The fourth lens 114 may have the positive refractive power. The fifth lens 115 may have the positive refractive power. For example, the refractive power of at least one of the first lens 111, the second lens 112, the third lens 113, the fourth lens 114, and the fifth lens 115 may be variously changed.

For example, the first lens 111 may have positive (+) refractive power. The first lens 111 may be made of a plastic or glass material. For example, the first lens 111 may be made of a plastic material.

The first lens 111 may include a first surface S1 defined as the object side surface and a second surface S2 defined as the image side surface. The first surface S1 may be concave. In addition, the second surface S2 may be convex. In other words, the first surface S1 may be concave to the object side, and the second surface S2 may be concave to the object side. In other words, the first lens 111 may have a meniscus shape concave to the object side or a meniscus shape convex to the image side.

In addition, at least one of the first surface S1 and the second surface S2 may be an aspheric surface. For example, both the first surface S1 and the second surface S2 may be aspheric surfaces.

In addition, a center thickness T1 of the first lens 111 on the optical axis Lz may be larger than a center thickness T5 of the fifth lens 115 and a center thickness T4 of the fourth lens 114. In addition, the center thickness T1 of the first lens 111 may be smaller than a center thickness T2 of the second lens 112 and a center thickness T3 of the third lens 113. For example, the center thickness of the first lens 111 may be smaller than 1 mm and may be smaller than 0.5 times the center thickness of the second lens 112. In the embodiment, the center thicknesses may decrease in the order of the second lens 112, the third lens 113, the first lens 111, the fifth lens 115, and the fourth lens 114.

In addition, in the first lens 111, a clear aperture of the first surface S1, which is the object side surface, may be smaller than a clear aperture of the second surface S2, which is the image side surface. In other words, the clear aperture of the second surface S2 may be larger than the clear aperture of the first surface S1. In the embodiment, the clear aperture will be described based on the circular shape before D-cut.

Furthermore, the clear aperture of the second surface S2 of the first lens 111 may be the largest among the first lens 111 to the fifth lens 115. Therefore, the first surface S1 of the first lens 111 may have the largest clear aperture among the first lens 111 to the fifth lens 115 excluding the second surface S2. In other words, the clear aperture of the first surface S1 may be larger than a clear aperture of any one of the second lens 112 to the fifth lens 115.

When a radius of curvature is an absolute value, a radius of curvature of the first surface S1 of the first lens 111 may be larger than a radius of curvature of the second surface S2 and may be, for example, 2 or more times the radius of curvature of the second surface S2. Furthermore, the radius of curvature of the first surface S1 of the first lens 111 may be the largest in the first lens group G1.

In addition, when the radius of curvature is an absolute value, the radius of curvature of the first surface S1 of the first lens 111 may be larger than the sum of two surfaces (excluding the first surface) of any one lens of the first lens group G1.

The second lens 112 may have positive (+) refractive power. The second lens 112 may be made of a plastic or glass material. For example, the second lens 112 may be made of a plastic material.

The second lens 112 may include the third surface S3 defined as the object side surface and the fourth surface S4 defined as the image side surface. The third surface S3 may be convex. In addition, the fourth surface S4 may be concave. In addition, the third surface S3 may be convex to the object side, and the fourth surface S4 may be convex to the object side. In other words, the second lens 112 may have a meniscus shape convex to the object side or a meniscus shape concave to the image side. At least one of the third surface S3 and the fourth surface S4 may be an aspheric surface. For example, both the third surface S3 and the fourth surface S4 may be aspheric surfaces.

When a radius of curvature is an absolute value, a radius of curvature of the third surface S3 of the second lens 112 may be larger than a radius of curvature of the fourth surface S4 and may be, for example, 0.5 or less times the radius of curvature of the fourth surface S4. In addition, the radius of curvature of the third surface S3 may be the smallest in the lens unit 110 excluding the sixth surface S6 of the third lens 113.

When the radius of curvature is an absolute value, the radius of curvature of the fourth surface S4 may be smaller than a radius of curvature of the fifth surface S5, which is the object side surface of the third lens 113. In addition, the radius of curvature of the fourth surface S4 of the second lens 112 may be larger than the radii of curvature of the third surface S3, the sixth surface S6, the seventh surface S7, and the eighth surface S8 and may be smaller than the radii of curvature of the first surface S1, the fifth surface S5, the ninth surface S9, and the tenth surface S10.

The center thickness T2 of the second lens 112 on the optical axis Lz may have the largest thickness within the lens unit 110.

The third lens 113 may have negative (-) refractive power. The third lens 113 may be made of a plastic or glass material. For example, the third lens 113 may be made of a plastic material.

The third lens 113 may include the fifth surface S5 defined as the object side surface and the sixth surface S6 defined as the image side surface. The fifth surface S5 may be convex. The sixth surface S6 may be concave. In addition, the fifth surface S5 may be convex to the object side. In addition, the sixth surface S6 may be convex to the object side. For example, the third lens 113 may have a meniscus shape convex to the object side.

At least one of the fifth surface S5 and the sixth surface S6 may be an aspheric surface. For example, both the fifth surface S5 and the sixth surface S6 may be aspheric surfaces.

The center thickness T3 of the third lens 113 on the optical axis Lz may be the largest within the lens unit 110 excluding the second lens 112. For example, the center thickness of the third lens 113 may be larger than or equal to 0.7 mm or in a range of 0.7 mm to 1.2 mm.

The fourth lens 114 may have positive (+) refractive power. The fourth lens 114 may be made of a plastic or glass material. For example, the fourth lens 114 may be made of a plastic material.

The fourth lens 114 may include the seventh surface S7 defined as the object side surface and the eighth surface S8 defined as the image side surface. The seventh surface S7 and the eighth surface S8 may be aspheric surfaces.

The seventh surface S7 may be convex. The eighth surface S8 may be concave. In addition, the seventh surface S7 may be convex to the object side, and the eighth surface S8 may be convex to the object side. In other words, the fourth lens 114 may have a meniscus shape convex to the object side or a meniscus shape concave to the image side. At least one of the seventh surface S7 and the eighth surface S8 may be an aspheric surface. For example, both the seventh surface S7 and the eighth surface S8 may be aspheric surfaces.

The center thickness T4 of the fourth lens 114 on the optical axis Lz may be larger than the center thickness T1 of the first lens 111 and the center thickness T5 of the fifth lens 115. For example, the center thickness T4 of the fourth lens 114 may be the smallest in the lens unit 110.

In addition, in consideration of an absolute value, a radius of curvature of the eighth surface S8 of the fourth lens 114 may be larger than a radius of curvature of the seventh surface S7. Furthermore, the radius of curvature of the eighth surface S8 of the fourth lens 114 may be larger than the radii of curvature of the third surface S3 and the sixth surface S6.

The fifth lens 115 may have positive (+) refractive power. The fifth lens 115 may be made of a plastic or glass material. For example, the fifth lens 115 may be made of a plastic material.

The fifth lens 115 may include the ninth surface S9 defined as the object side surface and the tenth surface S10 defined as the image side surface. The ninth surface S9 and the tenth surface S10 may be aspheric surfaces.

The ninth surface S9 may be concave. The tenth surface S10 may be convex. In addition, the ninth surface S9 may be concave to the object side, and the ninth surface S9 may be concave to the object side. For example, the fifth lens 115 may have a meniscus shape concave to the object side or a meniscus shape convex to the image side.

In addition, at least one of the ninth surface S9 and the tenth surface S10 may be an aspheric surface. For example, both the ninth surface S9 and the tenth surface S10 may be aspheric surfaces.

In addition, the seventh surface S7 and the ninth surface S9 may have an inflection point. For example, the inflection point of the seventh surface S7 or the ninth surface S9 may be spaced 1 mm or more from the optical axis, and with this configuration, it is possible to easily suppress the occurrence of a flare phenomenon.

In addition, the center thickness T5 of the fifth lens 115 on the optical axis Lz may be smaller than the center thickness T2 of the second lens 112. In addition, the center thickness T5 of the fifth lens 115 may be larger than the center thickness T4 of the fourth lens 114.

The optical system may include a diaphragm ST for adjusting an amount of incident light. The diaphragm ST may be disposed between two lenses selected from the plurality of lenses 111, 112, 113, 114, and 115. For example, the diaphragm ST may be disposed on a circumference between the second lens 112 and the third lens 113 or a circumference between the first and second lenses 111 and 112. For example, the diaphragm ST may be disposed between the first lens group G1 and the second lens group G2. As another example, in the diaphragm ST, a circumferential surface of the object side surface or the image side surface of at least one of the plurality of lenses may function as a diaphragm. The diaphragm ST may function to adjust the amount of incident light.

The filter 192 may be disposed between the lens unit 110 and the image sensor 190. The filter 192 may include at least any one of optical filters such as an infrared filter and a cover glass. The filter 192 may pass through light in a set wavelength band and filter light in a different wavelength band. When the filter 192 includes the infrared filter, radiant heat emitted from external light can be blocked from being transmitted to the image sensor 190. In addition, the filter 192 may transmit visible light and reflect infrared rays.

Furthermore, a dummy member (not illustrated) may be further disposed between the filter 192 and the fifth lens 115. Such a dummy member may be made of a glass, a plastic material, etc. In addition, the dummy member may be a flat member (e.g., a flat lens).

The image sensor 190 may detect light passing through the filter 192 or the last lens and convert the light into an electrical signal. The image sensor 190 may detect light sequentially passing through the first lens to the fifth lens 111, 112, 113, 114, and 115. The image sensor 190 may include a charge coupled device (CCD), a complementary metal oxide semiconductor (CMOS), etc.

[Table 1]

| Lens | Surface | Radius of curvature (mm) | Thickness or distance (mm) | Curvature | Refractive index | Abbe's number |
|---|---|---|---|---|---|---|
| First lens | First surface | -27.8979 | 0.5291 | -0.035845 | 1.5368 | 55.6762 |
| | Second surface | -9.6445 | 0.2540 | -0.103686 | | |
| Second lens | Third surface | 3.7347 | 1.4400 | 0.2677623 | 1.5368 | 55.6762 |
| | Fourth surface | 8.3000 | 0.3862 | 0.1204819 | | |
| Third lens | Fifth surface | 12.2000 | 0.8519 | 0.0819672 | 1.6206 | 25.9493 |
| | Sixth surface | 2.6872 | 1.5792 | 0.3721339 | | |
| Fourth lens | Seventh surface | 4.0802 | 0.4500 | 0.2450875 | 1.5368 | 55.6762 |
| | Eighth surface | 5.8360 | 0.3177 | 0.1713515 | | |
| Fifth lens | Ninth surface | -50.0000 | 0.5086 | -0.02 | 1.6206 | 25.9493 |
| | Tenth surface | -12.9402 | - | -0.077279 | | |

Here, a distance of the object side surfaces refers to a thickness, and a distance of the image side surfaces refers to a distance from a next member.

[Table 2]

| Items | One embodiment |
|---|---|
| TTL | 17.2530 |
| EFL | 17.1375 |
| BFL | 10.9362 |
| ImgH | 3.2000 |
| f1 | 27.1843 |
| f2 | 11.3932 |
| f3 | -5.7504 |
| f4 | 23.1882 |
| f5 | 27.9846 |
| Fno | 3.3603 |
| HFOV | 10.5000 |

Table 1 shows the radii of curvature of the first lens to the fifth lens 111, 112, 113, 114, and 115 according to one embodiment, the center thickness (mm) of each lens, the distance (mm) between the lenses, a curvature, a refractive index, and an Abbe's number. In addition, Table 2 shows a total track length (TTL), an effective focal length (EFL), a back focus length (BFL), and a focal length of the lens of the optical system according to one embodiment. In addition, an F number of the entire lens unit is 3 or more, for example, 3.3603. An angle (HFOV) viewed from the camera module may be 20 degrees or less, for example, in a range of 8 degrees to 15 degrees. Here, the angle (HFOV) viewed from the camera module is a half angle of view. Therefore, the angle (HFOV) may be 1/2 times or 0.5 times the angle of view in the camera module.

Referring to Table 1, refractive indices of the first lens 111, the second lens 112, and the fourth lens 114 may be the same. In addition, the refractive indices of the first lens 111, the second lens 112, and the fourth lens 114 may be smaller than those of the third lens 113 and the fifth lens 115. In other words, the refractive indices of the third lens 113 and the fifth lens 115 may be larger than those of other lenses.

The Abbe's numbers of the first lens 111, the second lens 112, and the fourth lens 114 may be 50 or more and may be the same. In addition, the Abbe's numbers of the first lens 111, the second lens 112, and the fourth lens 114 may be larger than the Abbe's number of the third lens 113. In addition, the Abbe's number of the third lens 113 is smaller than 50 and may be the same as the Abbe's number of the fifth lens 115. In addition, the Abbe's number of the fifth lens 115 is smaller than the Abbe's number of the fourth lens 114.

In addition, referring to Table 2, the EFL of the optical system may be smaller than the focal length f1 of the first lens 111. In addition, the EFL of the optical system may be greater than the focal length f2 of the second lens 112.

In addition, in the optical system according to the embodiment, the focal lengths may be smaller in the order of the fifth lens 115, the first lens 111, the fourth lens 114, the second lens 112, and the third lens 113.

$$[\text{Expression 1}]$$

$$7 < EFL < 35$$

In Expression 1, EFL denotes the effective focal length (mm) of the optical system. Specifically, the EFL of the optical system may be $8 < EFL < 30$. More specifically, the EFL of the optical system may be $9 < EFL < 26$. Therefore, the optical system may be applied to an electronic device such as a mobile terminal by having a wide or tele lens unit.

$$[\text{Expression 2}]$$

$$L1S1 / L1S2 < 1$$

In Expression 2, L1S1 denotes the clear aperture (mm) of the first surface S1, which is the object side surface of the first lens 111, and L1S2 denotes the clear aperture (mm) of the second surface S2, which is the image side surface of the first lens 111. Specifically, L1S1/L1S2 may satisfy $0.5 < L1S1/L1S2 < 1$. More specifically, L1S1/L1S2 may satisfy $0.9 < L1S1/L1S2 < 1$.

$$[\text{Expression 3}]$$

$$-10 < R\_L1 / R\_L3 < 0$$

In Expression 3, R_L1 denotes the radius of curvature (mm) of the object side surface (first surface S1) of the first lens 111, and R_L3 denotes the radius of curvature (mm) of the object side surface (third surface S3) of the second lens 112. Specifically, when the radius of curvature is an absolute value, R_L1 and R_L3 may satisfy $0 < R\_L1/R\_L3 < 10$. Specifically, R_L1 and R_L3 may satisfy $1 < R\_L1/R\_L3 < 9$. More specifically, R_L1 and R_L3 may satisfy $2 < R\_L1/R\_L3 < 8$. Therefore, it is possible to decrease the refractive power and sensitivity of the first lens, thereby suppressing a great decrease in resolution. In addition, for example, R_L1 and R_L3 may have opposite signs.

$$[\text{Expression 4}]$$

$$0.55 < LnS2 / L1S1 < 1$$

In Expression 4, L1S1 denotes the clear aperture (mm) of the first surface S1, which is the object side surface of the first lens 111, and LnS2 denotes the clear aperture (mm) of any one of the second surface, the fourth surface, the sixth surface, the eighth surface, and the tenth surface, which is the image side surfaces of any one of the first lens 111 to the fifth lens 115. Specifically, LnS2/L1S1 may satisfy $0.57 < LnS2/L1S1 < 1$. More specifically, LnS2/L1S1 may satisfy $0.55 < LnS2/L1S1 < 1$. With this configuration, there is an advantage in that process difficulty is reduced in the case of a non-circular shape, and optical properties can be improved.

[Expression 5]

$$0.15 < TH\_L1 / TH\_L2 < 0.55$$

In Expression 4, TH_L1 denotes the center thickness (mm) of the first lens 111, and TH_L2 denotes the center thickness (mm) of the second lens 112. Specifically, TH_L1 and TH_L2 may satisfy 0.15<TH_L1/TH_L2<0.50. More specifically, TH_L1 and TH_L2 may satisfy 0.15<TH_L1/TH_L2<0.54. There is a problem in that, when the ratio is smaller than 0.15, manufacturing is difficult, and when the ratio is larger than 1, it is difficult to realize performance due to an increase in the refractive power of the first lens.

[Expression 6]

$$|f1| > |f2| + |f3|$$

In Expression 6, f1 denotes the focal length (mm) of the first lens 111, and f2 denotes the focal length (mm) of the second lens 112. In addition, f3 denotes the focal length (mm) of the third lens 113. When the expression is unsatisfactory, there is a problem in that a change in optical performance with respect to the refractive power of the first lens increases.

[Expression 7]

$$2 < BFL / ImgH < 7$$

In Expression 7, BFL denotes the distance (mm) in the optical axis direction from the image side surface of the lens, which is closest to the image sensor 190, among the plurality of lenses to the image sensor 190. In addition, ImgH denotes a value of 1/2 of a diagonal length (mm) of the effective region of the image sensor 190. In other words, ImgH denotes a distance (mm) in a vertical direction from the optical axis of an upper surface of the image sensor 190 to a field region. Specifically, BFL/ImgH may be 2.2<BFL/ImgH<5. More specifically, BFL/ImgH may be 3<BFL/ImgH<4. In addition, there is a problem in that, when the ratio is smaller than 2, it is difficult to realize optical performance according to a length of the lens barrel, and there is a problem in that, when the ratio is larger than 7, the thickness of the lens is reduced, thereby making it difficult to manufacture.

[Expression 8]

$$0.4 < BFL / EFL < 0.9$$

In Expression 8, BFL denotes the distance (mm) in the optical axis direction from the image side surface of the lens, which is closest to the image sensor 190, among the plurality of lenses to the image sensor 190. In addition, EFL denotes the effective focal length (mm) of the optical system. Specifically, BFL/EFL may be 0.5<BFL/EFL<0.8. More specifically, BFL/EFL may be 0.55<BFL/EFL<0.75. There is a problem in that, when the ratio is smaller than 0.4, it is difficult to realize performance because the length of the lens barrel increases, and there is a problem in that, when the ratio is larger than 0.9, the optical system has no tele or telescopic camera function.

[Expression 9]

$$1.0 < TTL / BFL < 2.0$$

In Expression 9, TTL denotes a distance (mm) in the optical axis direction from the object side surface (first surface S1) of the lens (first lens 111), which is closest to the object side, among the plurality of lenses to the image sensor 190. In addition, BFL denotes a distance (mm) in the optical axis direction from the image side surface of the lens, which is closest to the image sensor 190, among the plurality of lenses to the image sensor 190. Specifically, TTLBFL may be 1.1<TTLBFL<1.9. More specifically, TTLBFL may be 1.2<TTL/BFL<1.8. There is a problem in that, when the ratio is smaller than 1.0, design sensitivity increases, and there is a problem in that, when the ratio is larger than 2.0, it is difficult to realize performance due to an increase in the size of the lens barrel.

[Expression 10]

$$0.75 < DL2 / TTL < 0.98$$

In Expression 10, DL2 denotes a distance (mm) in the optical axis direction from the object side surface (third surface S3) of the lens (second lens 112), which is second closest to the object side, among the plurality of lenses to the image sensor 190. In addition, TTL denotes a distance (mm) in the optical axis direction from the object side surface (first surface S1) of the lens (first lens 111), which is closest to the object side, among the plurality of lenses to the image sensor 190. Specifically, DL2/TTL may satisfy 0.85<DL2/TTL<0.96. There is a problem in that, when the ratio is smaller than 0.75, design sensitivity increases, and when the ratio is larger than 0.98, it is difficult to realize performance according to the length of the lens unit.

In addition, when the optical system includes 5 lenses as in the first embodiment, Expression 10 to Expression 15 below may be further satisfied.

[Expression 11]

$$0.55 < LnS2 / L1S1 < 1$$

In Expression 4, L1S1 denotes the clear aperture (mm) of the first surface S1, which is the object side surface of the first lens 111, and LnS2 denotes the clear aperture (mm) of any one of the second surface, the fourth surface, the sixth surface, the eighth surface, and the tenth surface, which is the image side surfaces of any one of the first lens 111 to the fifth lens 115. Specifically, LnS2/L1S1 may be 0.57<LnS2/L1S1<1. More specifically, LnS2/L1S1 may be 0.55<LnS2/L1S1<1. With this configuration, there is an advantage in that process difficulty is reduced in the case of a non-circular shape, and optical properties can be improved.

[Expression 12]

$$1 < TH\_L1 / d12 < 5$$

In Expression 12, TH_L1 denotes the center thickness (mm) of the first lens 111, and d12 denotes a distance (mm) in the optical axis Lz direction between the first lens 111 and the second lens 112. Specifically, TH_L1/d12 may be 1.5<TH_L1/d12<4.5. There is a problem in that, when the ratio is smaller than 1, it is difficult to realize performance due to an increase in sensitivity, and when the ratio is larger than 5, it is difficult to realize performance due to the thickness of the first lens.

[Expression 13]

$$0.5 < f1 / EFL < 2$$

In Expression 13, f1 denotes the focal length (mm) of the first lens 111, and EFL denotes the effective focal length (mm) of the optical system. Specifically, f1/EFL may be 0.7<f1/EFL<1.7. More specifically, f1/EFL may be 1.2<f1/EFL<1.6. There is a problem in that, when the ratio is smaller than 0.5, performance is reduced due to the refractive power of the first lens, and there is a problem in that, when the ratio is larger than 2, the sensitivities of the other lenses increase due to the dispersion of the refractive power.

[Expression 14]

$$0.5 < L1S1\ C.A / I.H < 0.9$$

In Expression 14, L1S1 C.A denotes the clear aperture of the object side surface of the first lens, and I.H denotes a value of 1/2 the diagonal length (mm) of the effective region of the image sensor. Specifically, L1S1 C.A/I.H may be 0.55<L1S1 C.A/I.H<0.85. More specifically, L1S1 C.A/I.H may be 0.6<L1S1 C.A/I.H<0.8. When the ratio is out of the range, a D-cut ratio decreases, and thus there is a limit to improving the level of difficulty of a process.

[Expression 15]

$$0.5 < f / f1 < 1$$

In Expression 15, f denotes the focal length of the optical system, and f1 denotes the focal length of the first lens. Specifically, f/f1 may be 0.55<f/f1<1. In addition, more specifically, f/f1 may be 0.6<f/f1<1. With this configuration, it is possible to decrease a magnitude of the refractive power of the first lens.

The optical system according to the embodiment may satisfy at least one of Expression 1 to Expression 15. In addition, in the optical system, the first lens to the fifth lens 111, 112, 113, 114, and 115 may have a circular shape. Alternatively, at least some of the first lens to the fifth lens may have a non-circular shape, for example, a shape having a flat side surface portion. For example, at least one of the first lens to the third lens may have the flat side surface portion. Therefore, the optical system may be implemented in a smaller size and provided in a compact shape compared to the circular shape.

In addition, when the optical system satisfies at least one of Expression 1 to Expression 15, the optical system may be applied to a folded camera. Specifically, the optical system may include the optical member (e.g., a prism) and change light incident in a direction perpendicular to a surface of the applied device to light in a direction parallel to the surface of the device. Therefore, since the optical system including the plurality of lenses may have a smaller thickness within the device, the device may be provided to be thinner.

[Table 3]

| | Expression | One embodiment |
|---|---|---|
| Expression 1 | 7<EFL<3 5 | Satisfied |
| Expression 2 | L1S1/L1S2<1 | Satisfied |
| Expression 3 | -10<R_L1/R_L3<0 | Satisfied |
| Expression 4 | 0.55<LnS2/L1S1<1 | Satisfied |
| Expression 5 | 0.15<TH_L1/TH_L2<0.55 | Satisfied |
| Expression 6 | \|f1\|>\|f2\|+\|f3\| | Satisfied |
| Expression 7 | 2<BFL/ImgH<7 | Satisfied |
| Expression 8 | 0.4<BFL/EFL<0.9 | Satisfied |
| Expression 9 | 1.0<TTL/BFL<2.0 | Satisfied |
| Expression 10 | 0.75<DL2/TTL<0.98 | Satisfied |
| Expression 11 | 0.55<LnS2/L1S1<1 | Satisfied |
| Expression 12 | 1<TH_L1/d12<5 | Satisfied |
| Expression 13 | 0.5<f1/EFL<2 | Satisfied |
| Expression 14 | 0.5<L1S1 C.A/I.H<0.9 | Satisfied |
| Expression 15 | 0.5<f/f1<1 | Satisfied |

Table 3 shows result values of the optical system according to the embodiment for the above-described expressions. Referring to Table 3, it can be seen that the optical system according to one embodiment satisfies at least one or two or more of Expression 1 to Expression 15. For example, at least one or two or more of the first lens to the fifth lens 111, 112, 113, 114, and 115 of the lens unit 110 may have lengths in the second direction (X-axis direction) or a direction perpendicular to the thickness direction of the portable device and lengths in the first direction (Y-axis direction) or a length in the thickness direction of the portable device, which are different from each other. For example, at least one or all of the first lens to the fourth lens 111, 112, 113, and 114 may have the lengths in the second direction (X-axis direction) smaller than the lengths in the first direction (Y-axis direction). The lenses 111, 112, and 113 of the first lens group may have the lengths in the first direction (Y-axis direction) smaller than the lengths in the second direction (X-axis direction). Here, the length of each of the lenses 111, 112, 113, 114, and 115 is the length of the clear aperture or the effective region. The first lens to the fifth lens 111, 112, 113, 114, and 115 may have a clear aperture through which light transmits. For example, each of the first surface to the tenth surface S1, S2, S3, S4, S5, S6, S7, S8, S9, and S10 may have a set clear aperture.

In the embodiment, both surfaces of the fourth lens 114 in the optical system 10A may be convex to the object side. In addition, the fourth lens 114 may have the object side surface S7 convex to the object side and the image side surface S8 convex to the object side. In other words, the fourth lens 114 may have a meniscus shape convex to the object side.

In addition, both surfaces of the fifth lens 115 in the optical system 10A may be concave to the object side. The fifth lens 115 may have the object side surface S9 concave to the object side and the image side surface S10 concave to the object side. Therefore, the fifth lens 115 may have a meniscus shape in which the object side surface S9 is concave to the object side. As described above, by conversely forming the convex or concave shapes of the fourth lens 114 and the fifth lens 115, even when a distance between the fourth lens 114 and the fifth lens 115 is small, it is possible to reduce the occurrence of ghost or flare in the optical system 10A according to the embodiment.

Referring to FIG. 6, in a comparative example, the object side surface of the fifth lens may be convex toward the object side, and the image side surface of the fifth lens may be convex to the object side. In this case, as indicated by the arrows in the drawing, light incident on the optical system is reflected, and thus an afterimage, such as a shape of a light source or a shape of a diaphragm without a subject, is present at a position corresponding to the light source.

Unlike this, referring to FIG. 7, in the embodiment, the object side surface of the fifth lens may be concave to the object side, and the image side surface of the fifth lens may be convex to the image side. In addition, unlike the comparative example, it can be seen that the afterimage in the shape of the light source or the shape of the diaphragm are not left on the image sensor.

As described above, since the optical system 10A according to the embodiment has the concave object side surface or image side surface of the fifth lens 115, it is possible to suppress the occurrence of ghost.

In addition, in the optical system 10A according to the embodiment, at least one lens surface having the clear aperture with a larger size than the second surface S2 may not be present. In other words, the clear aperture of the second surface S2 of the first lens 111 may be the largest in the optical system.

In addition, the lens surfaces of the second lens 112 to fifth lens 115 having the clear aperture with a larger size than the first surface S1, which is the object side surface of the first lens 111, may not be present. In other words, the clear aperture of the first surface S1 of the first lens 111 may be larger than the lens surfaces of the second lens 112 to the fifth lens 115.

In addition, the clear apertures may decrease in the order of the second surface S2, the first surface S1, the third surface S3, the fourth surface S4, the fifth surface S5, the eighth surface S8, the sixth surface S6, the seventh surface S7, the ninth surface S9, and the tenth surface S10 along the optical axis Lz.

For example, the clear aperture of the second lens 112 may have a smaller size than the clear aperture of the first lens 111. For example, the third surface S3, which is the object side surface of the second lens 112, and the fourth surface S4, which is the image side surface of the second lens 112, may have smaller clear apertures than the first surface S1 and the second surface S2 of the first lens 111. The size of the clear aperture of the third surface S3 may be the third largest next to the first surface S1 and the second surface S2 among the first surface to the eighth surface S1, S2, S3, S4, S5, S6, S7, and S8.

In addition, the size of the clear aperture of the fourth surface S4 may be the fourth largest next to the first surface S1 to the third surface S3 among the first surface to the eighth surface S1, S2, S3, S4, S5, S6, S7, and S8. In other words, the sizes of the clear apertures may be in the order of S2>S1>S3>S4. In addition, the size of the effective area may be S2>S1>S3>S4.

In addition, as described above, in the embodiment, a ratio between the clear aperture of the first surface S1, which is the object side surface of the first lens 111, and the clear apertures of the object side surfaces of the second lens 112 to the fifth lens 115 may be in a range of 1:0.55 to 1:1.

In addition, the magnitude of the refractive power of the third lens 113 may be larger than the magnitude of the refractive power of any one of the first lens 111, the second lens 112, the fourth lens 114, and the fifth lens 115. In other words, the magnitude of the refractive power of the third lens 113 may be the largest in the optical system.

For example, the magnitude of the refractive power of each lens in the optical system 10A may decrease in the order of the third lens 113, the second lens 112, the fourth lens 114, the first lens 111, and the fifth lens 115. However, the order of the first lens and the second lens may be changed. In this case, the magnitude of the refractive power may be an absolute value.

Furthermore, in the embodiment, the size of the focal length of each lens in the optical system 10A may increase in the order of the fifth lens 115, the first lens 111, the fourth lens 114, the second lens 112, and the third lens 113. In this case, the size of the focal length may be an absolute value.

In the embodiment, a separation distance (corresponding to the above-described "interval") between the third lens 113 and the fourth lens 114 may be the largest among separation distances between adjacent lenses in the optical system. In addition, the separation distance between the third lens 113 and the fourth lens 114 may be larger than a separation distance between the second lens 112 and the third lens 113. In addition, the separation distance between the second lens 112 and the third lens 113 may be larger than a separation distance between the fourth lens 114 and the fifth lens 115 or a separation distance between the first lens 111 and the second lens 112.

Furthermore, as described above, Abbe's numbers of the first lens 111, the second lens 112, and the fourth lens 114 may be 50 or more and may be the same. In addition, the Abbe's numbers of the first lens 111, the second lens 112, and the fourth lens 114 may be larger than an Abbe's number of the third lens 113 or the fifth lens 115. In addition, the Abbe's number of the third lens 113 is smaller than 50 and may be the same as the Abbe's number of the fifth lens 115.

In addition, the Abbe's number of the fourth lens 114 may be larger than 50. Specifically, the Abbe's number of the fourth lens 114 may be 52 or more, and more specifically, the Abbe's number of the fourth lens 114 may be 54 or more. Therefore, it is possible to overcome the limitation in which the level of difficulty in design increases.

Furthermore, a ratio between the Abbe's number of the first lens 111 and the Abbe's number of the fifth lens 115 may be in a range of 1:0.2 to 1:0.5. Specifically, the ratio may be in a range of 1:0.25 to 1:0.45. More specifically, the ratio may be in a range of 1:0.3 to 1:0.4. Therefore, the fifth lens 115 may have high refraction compared to the first lens 111. Therefore, an image or an image may be easily formed through the high refraction of light.

In addition, in the embodiment, at least one of the first lens 111, the second lens 112, and the third lens 113 may have a maximum length in the first direction (Y-axis direction) larger than a maximum length in the second direction (X-axis direction).

Further referring to FIG. 4, the effective region of any one of the first surface S1 to the fifth surface S5 may include first to fourth edges A1, A2, A3, and A4.

The first edge A1 and the second edge A2 may be edges facing each other in the first direction (Y-axis direction) perpendicular to the optical axis Lz. The first edge A1 and the second edge A2 may have a curved shape. The first edge A1 and the second edge A2 may be provided in a curved shape having the same length and curvature. In other words, the first edge A1 and the second edge A2 may have a symmetrical shape based on a virtual line passing through the optical axis Lz and extending in the second direction (X-axis direction).

In addition, the third edge A3 and the fourth edge A4 may be edges facing each other in the second direction (X-axis direction) perpendicular to the optical axis Lz and the first direction. The third edge A3 and the fourth edge A4 may be edges connecting ends of the first edge A1 and the second edge A2. The third edge A3 and the fourth edge A4 may have a straight shape. The third edge A3 and the fourth edge A4 may have the same length and may be parallel to each other. In other words, the third edge A3 and the fourth edge A4 may have a symmetrical shape based on a virtual line passing through the optical axis Lz and extending in the first direction (Y-axis direction).

The first surface S1 to the fifth surface S5 may have a non-circular shape, for example, a D-cut shape, as The first surface S1 to the fifth surface S5 include the first to fourth edges A1, A2, A3, and A4.

The first surface S1 to the fifth surface S5 may have the above-described non-circular shape in a process of manufacturing the first lens 111 to the third lens 113. For example, when the first lens to the third lens 111, 112, and 113 are made of a plastic material, the first lens to the third lens 111, 112, and 113 may be manufactured in the above-described non-circular shape during an injection process.

The first lens 111 to the third lens 113 may be manufactured in a circular shape through the injection process, and in a subsequent cutting process, portions of the first surface S1 to the fifth surface S5 may be cut, and thus the first surface S1 to the fifth surface S5 may have the third edge A3 and the fourth edge A4.

Therefore, the effective region of each of the first surface S1 to the fifth surface S5 may have a set size. For example, a length (clear aperture (CA)) of a virtual first straight line passing through the optical axis Lz and connecting the first edge A1 to the second edge A2 may be larger than a length (clear height (CH)) of a virtual second straight line passing through the optical axis Lz and connecting the third edge A3 to the fourth edge A4. Here, the length CA of the first straight line may be a maximum size CA of the clear aperture of each of the first surface to the third surface S1, S2, and S3, and the length CH of the second straight line may be a minimum size CH of the clear aperture of each of the first surface to the fifth surface S1, S2, S3, S4, and S5.

In addition, in the above description, although it has been described that the effective regions of the first surface S1 to the fifth surface S5 have a non-circular shape, the present invention is not limited thereto, the effective region of each of the first surface S1 to the fifth region S5 may have a circular shape, and the non-effective region of each of the first surface S1 to the fifth surface S5 may have a non-circular shape.

Furthermore, the first lens 111, the second lens 112, and the third lens 113 may have the same maximum length in the second direction (X-axis direction).

In addition, in the optical system 10A according to the embodiment, at least one of the fourth lens 114 and the fifth lens 115 may have an inflection point on the object side surface. Therefore, it is possible to suppress a flare phenomenon of light passing through the fourth lens and the fifth lens.

Referring to FIG. 5, a longitudinal spherical aberration is a spherical aberration according to each wavelength, an astigmatic field curve means aberration characteristics of a tangential plane and a sagital plane according to a height of the image surface, and a distortion means a degree of distortion according to the height of the image surface. As illustrated in FIG. 5, regardless of a wavelength in the optical system according to the embodiment, it can be seen that the longitudinal spherical aberration is in a range of -0.08 mm to 0.08 mm, it can be seen that the astigmatic field curve is in a range of -0.05 mm to 0.05 mm, and it can be seen that the distortion is in a range of -0.05 mm to 0.05 mm.

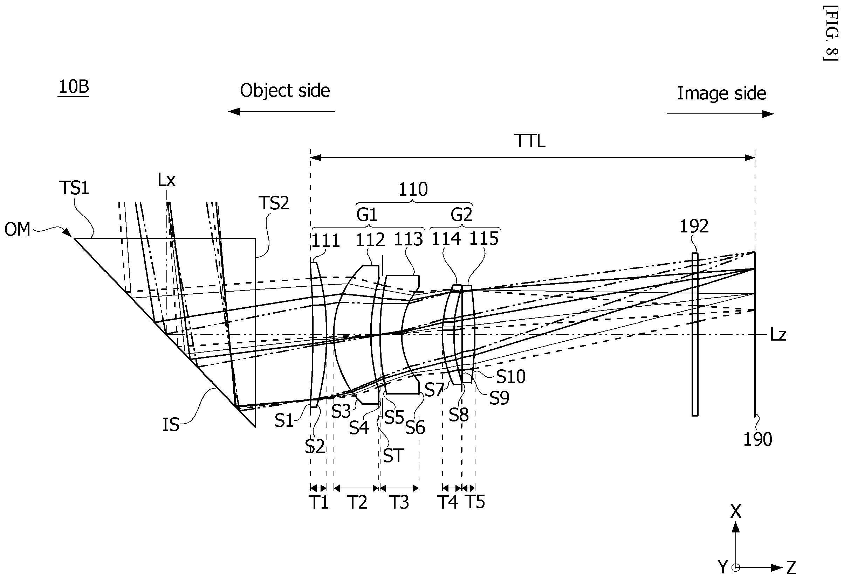

FIG. 8 is a cross-sectional view of an optical system according to a modified example.

Referring to FIG. 8, an optical system 10B according to the modified example may include an optical member OM, the lens unit 110, the filter 192, and the image sensor 190. The above contents excluding the following description may be applied in the same manner.

The optical member OM may be disposed at a front end of the lens unit 110. In addition, the plurality of lenses 111, 112, 113, 114, and 115 of the lens unit 110 may be sequentially disposed along the optical axis Lz (in the third direction), and light corresponding to image information of an object may be reflected from the optical member OM to sequentially pass through the plurality of lenses 111, 112, 113, 114, and 115 and the filter 192 and may be incident on the image sensor 190. The image sensor 190 and the filter 192 may be positioned on a side portion of the fifth lens 115 of the lens unit 110.

Furthermore, in the modified example, since a reflective member may be further disposed at a front end of the image sensor 190 to change an optical path in a direction different from the optical axis, the image sensor 190 may be disposed in a direction or at a position different from the optical axis. For example, an optical member having the same shape as the above-described optical member may be disposed within the lens unit, at a rear end of the lens unit, or a rear end of a filter unit.

The optical member OM may change the optical path by reflecting light incident from the outside. The optical member OM may be formed of a member for changing the optical path, such as a reflective member (e.g., a mirror) or a prism. For example, the optical member OM may reflect the incident light Lx in a direction of the optical axis Lz of the lens unit 110 at a right angle.

The optical member OM may be disposed closer to the object side than the plurality of lenses 111, 112, 113, 114, and 115. In other words, the optical system may include the optical member OM, the plurality of lenses 111, 112, 113, 114, and 115, the filter 192, and the image sensor 190, which are sequentially disposed from the object side to the image side. The optical member OM and the lens unit 110 may be disposed side by side along the optical axis Lz.

As described above, the optical member OM may be rotated about the first direction (Y-axis direction), rotated about the second direction (X-axis direction), and/or rotated based on the third direction (Z-axis direction) or the direction of the optical axis Lz by at least one or two more driving units in the first actuator.

Therefore, the optical system according to the embodiment may be applied to a folded camera in which the thickness of the camera may decrease. This may be applied to both the optical system to be described below and the folded camera.

In addition, the optical system may change light incident in a direction perpendicular to the surface of the applied device through the above-described optical member OM to light in a direction parallel to the surface of the device. Therefore, since the optical system including the plurality of lenses may have a smaller thickness within the device, the device including the camera module may be provided to be thinner.

In the optical system 10B according to the embodiment, the optical member OM may be a prism PR or a mirror MR as described above and may include an inclined surface IS inclined to the optical axis to change an optical path. The inclined surface IS may reflect the incident light Lx to change a path of the incident light into the optical axis direction (Z-axis direction).

The inclined surface IS that reflects light may be inclined at an angle that is not perpendicular to the optical axis Lz. For example, the inclined surface IS may form a predetermined inclined angle with the optical axis Lz.

In addition, in the embodiment, when the optical member OM is the prism PR, the optical member OM may include a first optical transmitting surface TS1 and a second optical transmitting surface TS2, which come into contact with the inclined surface IS. Here, the first optical transmitting surface TS1 and the second optical transmitting surface TS2 may be disposed parallel to the optical axis. For example, the first optical transmitting surface TS1 may be disposed parallel to the optical axis or the third direction (Z-axis direction). In other words, the first optical transmitting surface TS1 may have an incident surface parallel to the optical axis Lz.

In addition, the second optical transmitting surface TS2 may be disposed perpendicular to the optical axis Lz. For example, the second optical transmitting surface TS2 may be disposed parallel to the lens unit 110.

Therefore, the first optical transmitting surface TS1, the inclined surface IS, the second optical transmitting surface TS2, and the lens unit 110 may be sequentially disposed based on the optical path. For example, when the optical axis is viewed based on the optical path, the first optical transmitting surface TS1, the inclined surface IS, the second optical transmitting surface TS2, and the lens unit 110 may be sequentially disposed along the optical axis. In addition, the inclined surface IS may change a direction of the optical axis. For example, the optical member OM may reflect the incident light Lx at a right angle into the direction of the optical axis Lz of the lens unit 110.

In addition, according to the embodiment, a size of a clear aperture of the inclined surface may be larger than the size of the clear aperture of the object side surface of the first lens. With this configuration, the optical system according to the embodiment can provide improved optical characteristics while providing miniaturization.

Hereinafter, as described above, the above-described contents may be applied to descriptions of the lens unit 110, the filter 192, and the image sensor 190 in the same manner.

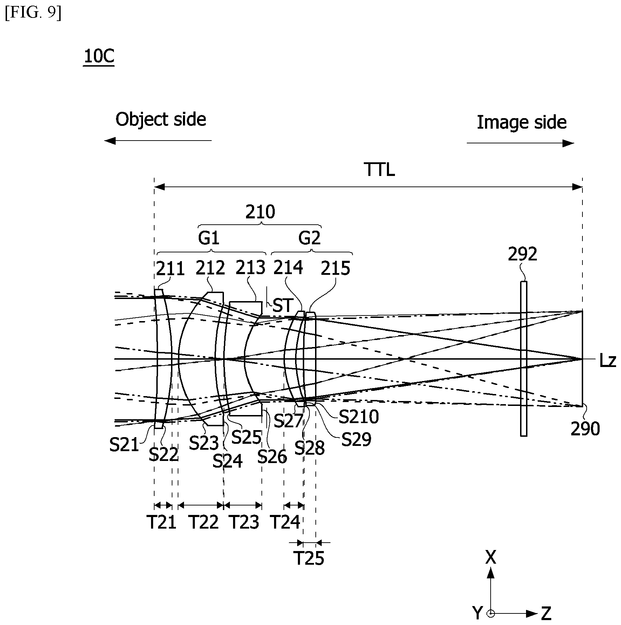

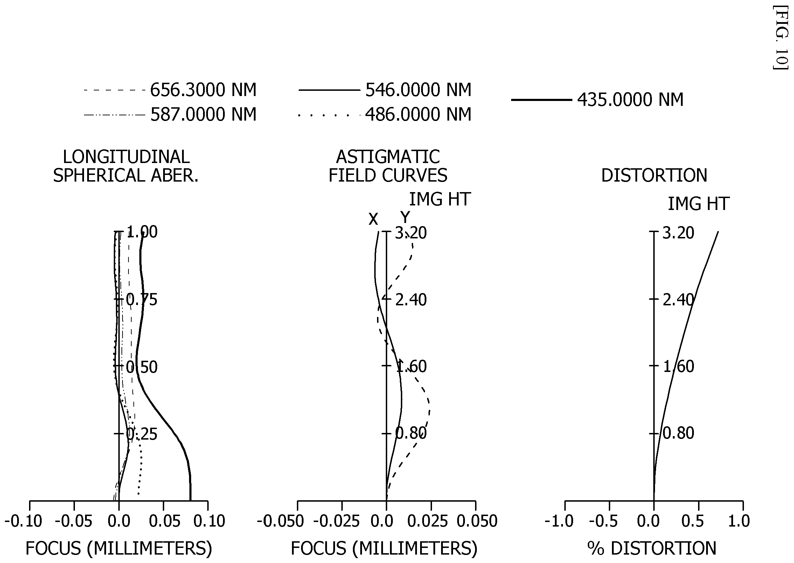

FIG. 9 is a cross-sectional view of an optical system according to another embodiment of the present invention, and FIG. 10 is a graph showing measured data of a longitudinal spherical aberration for light with wavelengths of 435 nm, 486 nm, 546 nm, 587 nm, and 656 nm, an astigmatic field curve for light with a wavelength of 546 nm, and a distortion for light with a wavelength of 546 nm of the optical system according to another embodiment.

Referring to FIG. 9, an optical system 10C according to another embodiment may be formed of a lens unit 210 including the first lens group G1 and the second lens group G2 sequentially disposed along the optical axis Lz from the object side to the image side. Furthermore, the optical system 10C may further include a filter 292 and an image sensor 290 sequentially disposed along the optical axis Lz from the object side to the image side. The above-described contents excluding the following description may be applied to each component in the same manner.

In addition, the first lens group G1 may include a first lens 211, a second lens 212, and a third lens 213 sequentially disposed along the optical axis Lz from the object side to the image side. In addition, the second lens group G2 may include a fourth lens 214 and a fifth lens 215 sequentially disposed along the optical axis Lz from the object side to the image side. Therefore, in the embodiment, in the optical system 10C, the first lens 211, the second lens 212, the third lens 213, the fourth lens 214, and the fifth lens 215 may be sequentially disposed along the optical axis Lz from the object side to the image side.

The first lens to the fifth lens 211, 212, 213, 214, and 215 may be sequentially disposed along the optical axis Lz. The first lens 211 may be disposed closest to the object among the plurality of lenses 211, 212, 213, 214, and 215, and the fifth lens 215 may be disposed closest to the filter 292 or the image sensor 290.

In addition, as described above, in the lens unit 210 according to the embodiment, a distance between the first lens group G1 and the second lens group G2 may be larger than a distance between lenses in each of the lens groups G1 and G2. In other words, the first lens group G1 and the second lens group G2 may be set based on lenses having the largest separation distance between the lenses. For example, a distance between adjacent lenses among the first lens 211 to the third lens 213 and a distance between the fourth lens 214 and the fifth lens 215 may be smaller than a distance between the third lens 213 and the fourth lens 214.

In addition, as described above, in the lens unit 210 according to the embodiment, the first lens group G1 and the second lens group G2 may be set based on whether a non-circular shape or a D-cut shape is applied thereto. In the embodiment, the non-circular shape or the D-cut shape may be applied to the first lens group G1. Therefore, a maximum length in the second direction (X-axis direction) may be smaller than a minimum length in a first direction (Y-axis direction) in at least one of the first lens 211 to the third lens 213 of the first lens group G1. With this configuration, since thicknesses of the optical system 10C and the camera module including the optical system in the second (X-axis direction) decrease, it is possible to easily decrease the thickness of the camera module or the electronic device.

Furthermore, a length of the first lens group G1 in the second direction (X-axis direction) may be larger than a length of the second lens group G2 in the second direction (X-axis direction). Therefore, since the thickness of the first lens group G1 is decreased by applying the non-circular shape to the first lens group G1, it is possible to easily decrease the thickness of the camera module or the electronic device.

In addition, each of the first lens 211 to the fifth lens 215 may include an effective region and a non-effective region. The effective region may be a region through which light incident on each of the lenses 211, 212, 213, 214, and 215 passes. In other words, the effective region may be a region in which the incident light is refracted to implement optical characteristics. The non-effective region may be disposed on a portion or around the effective region. The non-effective region may be a region in which no light is incident. In other words, the non-effective region may be a region unrelated to optical characteristics. In addition, the non-effective region may be a region fixed to a barrel (not illustrated) accommodating the lenses 211, 212, 213, 214, and 215. Furthermore, in each of the lenses 211, 212, 213, 214, and 215, the non-effective region may have a length in the first direction (Y-axis direction) larger than a length in the second direction (X-axis direction).

In addition, in the first lens group G1 and the second lens group G2, the first lens to the fifth lens 211, 212, 213, 214, and 215 may be serially disposed along the optical axis Lz. As described above, the first lens to the third lens 211, 212, and 213 may be combined into the first lens group, and the fourth lens 214 and the fifth lens 215 may be combined into the second lens group.

In addition, each of the first lens to the fifth lens 211, 212, 213, 214, and 215 may include one of object side surfaces S21, S23, S25, S27, and S29 and one of image side surfaces S22, S24, S26, S28, and S210. For example, the first lens 211 may include the object side surface S21 and the image side surface S22, the second lens 212 may include the object side surface S23 and the image side surface S24, the third lens 213 may include the object side surface S25 and the image side surface S26, the fourth lens 214 may include the object side surface S27 and the image side surface S28, and the fifth lens 215 may include the object side surface S29 and the image side surface S210.

In the embodiment, the first lens to the fifth lens 211, 212, 213, 214, and 215 may have positive or negative refractive power. Furthermore, in the specification, the first lens 211 may have the positive refractive power, the second lens 212 may have the positive refractive power, the third lens 213 may have the negative refractive power, the fourth lens 214 may have the positive refractive power, and the fifth lens 215 may have the positive refractive power. For example, the refractive power of at least one of the first lens 211, the second lens 212, the third lens 213, the fourth lens 214, and the fifth lens 215 may be variously changed.

For example, the first lens 211 may have positive (+) refractive power. The first lens 211 may be made of a plastic or glass material. For example, the first lens 211 may be made of a plastic material.

The first lens 211 may include a first surface S21 defined as the object side surface and a second surface S22 defined as the image side surface. The first surface S21 may be concave to the object side. In addition, in another example, the first surface S21 may be convex. In addition, the second surface S22 may be concave to the object side. In other words, the first lens 211 may have a meniscus shape concave to the object side or a meniscus shape convex to the image side.

In addition, at least one of the first surface S21 and the second surface S22 may be an aspheric surface. For example, both the first surface S21 and the second surface S22 may be aspheric surfaces.

In addition, a center thickness T21 of the first lens 211 on the optical axis Lz may be larger than a center thickness T25 of the fifth lens 215 and a center thickness T24 of the fourth lens 214. In addition, the center thickness T21 of the first lens 211 may be smaller than a center thickness T22 of the second lens 212 and a center thickness T23 of the third lens 213. For example, the center thickness of the first lens 211 may be smaller than 1 mm and may be smaller than 0.5 times the center thickness of the second lens 212. In the embodiment, the center thicknesses may decrease in the order of the second lens 212, the third lens 213, the first lens 211, the fifth lens 215, and the fourth lens 214.

In addition, in the first lens 211, a clear aperture of the first surface S21, which is the object side surface, may be smaller than a clear aperture of the second surface S22, which is the image side surface. In other words, the clear aperture of the second surface S22 may be larger than the clear aperture of the first surface S21. In the embodiment, the effective diameter will be described based on the circular shape before D-cut.

Furthermore, the clear aperture of the second surface S22 of the first lens 211 may be the largest among the first lens 211 to the fifth lens 215. Therefore, the first surface S21 of the first lens 211 may have the largest effective diameter among the first lens 211 to the fifth lens 215 excluding the second surface S22. In other words, the effective diameter of the first surface S21 may be larger than an effective diameter of any one of the second lens 212 to the fifth lens 215.

When a radius of curvature is an absolute value, a radius of curvature of the first surface S21 of the first lens 211 may be larger than a radius of curvature of the second surface S22 and may be, for example, 2 or more times the radius of curvature of the second surface S22. Furthermore, the radius of curvature of the first surface S21 of the first lens 211 may be the largest in the first lens group G1.

In addition, when the radius of curvature is an absolute value, the radius of curvature of the first surface S21 of the first lens 211 may be larger than the sum of two surfaces (excluding the first surface) of any one lens of the first lens group G1.

The second lens 212 may have positive (+) refractive power. The second lens 212 may be made of a plastic or glass material. For example, the second lens 212 may be made of a plastic material.

The second lens 212 may include the third surface S23 defined as the object side surface and the fourth surface S24 defined as the image side surface. The third surface S23 may be convex. In addition, the fourth surface S24 may be concave. In addition, the third surface S23 may be convex to the object side, and the fourth surface S24 may be convex to the object side. In other words, the second lens 212 may have a meniscus shape convex to the object side or a meniscus shape concave to the image side. At least one of the third surface S23 and the fourth surface S24 may be an aspheric surface. For example, both the third surface S23 and the fourth surface S24 may be aspheric surfaces.

When a radius of curvature is an absolute value, a radius of curvature of the third surface S23 of the second lens 212 may be larger than a radius of curvature of the fourth surface S24 and may be, for example, 0.5 or less times the radius of curvature of the fourth surface S24. The radius of curvature of the third surface S23 may be the smallest in the lens unit 210 excluding the sixth surface S26 of the third lens 213.

When the radius of curvature is an absolute value, the radius of curvature of the fourth surface S24 may be smaller than a radius of curvature of the fifth surface S25, which is the object side surface of the third lens 213. In addition, the radius of curvature of the fourth surface S24 of the second lens 212 may be larger than the radii of curvature of the third surface S23, the sixth surface S26, the seventh surface S27, and the eighth surface S28 and may be smaller than the radii of curvature of the first surface S21, the fifth surface S25, the ninth surface S29, and the tenth surface S210.

A center thickness T22 of the second lens 212 on the optical axis Lz may have the largest thickness within the lens unit 210.

The third lens 213 may have negative (-) refractive power. The third lens 213 may be made of a plastic or glass material. For example, the third lens 213 may be made of a plastic material.

The third lens 213 may include the fifth surface S25 defined as the object side surface and the sixth surface S26 defined as the image side surface. The fifth surface S56 may be convex. In addition, the sixth surface S2^ may be concave. In addition, the fifth surface S25 may be convex to the object side, and the sixth surface S26 may be convex to the object side. For example, the third lens 213 may have a meniscus shape convex to the object side or a meniscus shape concave to the image side.

At least one of the fifth surface S25 and the sixth surface S26 may be an aspheric surface. For example, both the fifth surface S25 and the sixth surface S26 may be aspheric surfaces.

A center thickness T23 of the third lens 213 on the optical axis Lz may be the largest within the lens unit 210 excluding the second lens 212. For example, the center thickness of the third lens 213 may be larger than or equal to 0.7 mm or in a range of 0.7 mm to 1.2 mm.

The fourth lens 214 may have positive (+) refractive power. The fourth lens 214 may be made of a plastic or glass material. For example, the fourth lens 214 may be made of a plastic material.

The fourth lens 214 may include the seventh surface S27 defined as the object side surface and the eighth surface S28 defined as the image side surface. The seventh surface S27 and the eighth surface S28 may be aspheric surfaces.

The seventh surface S27 may be convex. The eighth surface S28 may be concave. In addition, the seventh surface S27 may be convex to the object side, and the eighth surface S28 may be convex to the object side. In other words, the fourth lens 214 may have a meniscus shape convex to the object side or a meniscus shape concave to the image side. At least one of the seventh surface S27 and the eighth surface S28 may be an aspheric surface. For example, both the seventh surface S27 and the eighth surface S28 may be aspheric surfaces.

A center thickness T24 of the fourth lens 214 on the optical axis Lz may be larger than the center thickness T21 of the first lens 211 and the center thickness T25 of the fifth lens 215. For example, the center thickness T24 of the fourth lens 214 may be the smallest in the lens unit 210.

In addition, when an absolute value is taken, a radius of curvature of the eighth surface S28 of the fourth lens 214 may be larger than a radius of curvature of the seventh surface S27. Furthermore, the radius of curvature of the eighth surface S28 of the fourth lens 214 may be larger than the radii of curvature of the third surface S23 and the sixth surface S26.

The fifth lens 215 may have positive (+) refractive power. The fifth lens 215 may be made of a plastic or glass material. For example, the fifth lens 215 may be made of a plastic material.

The fifth lens 215 may include the ninth surface S29 defined as the object side surface and the tenth surface S210 defined as the image side surface. The ninth surface S29 and the tenth surface S210 may be aspheric surfaces.

The ninth surface S29 may be convex or concave. The ninth surface S29 may be convex to the object side, or the ninth surface S29 may be concave to the object side. In addition, the tenth surface S210 may be convex or concave.

In addition, at least one of the ninth surface S29 and the tenth surface S210 may be an aspheric surface. For example, both the ninth surface S29 and the tenth surface S210 may be aspheric surfaces.

In addition, the ninth surface S29 or the seventh surface S27 may have an inflection point. For example, the inflection point of the seventh surface S27 or the ninth surface S29 may be spaced 1 mm or more from the optical axis, and with this configuration, it is possible to easily suppress the occurrence of a flare phenomenon.

In addition, the center thickness T25 of the fifth lens 215 on the optical axis Lz may be smaller than the center thickness T22 of the second lens 212. In addition, the center thickness T25 of the fifth lens 215 may be larger than the center thickness T24 of the fourth lens 214.

The optical system may include a diaphragm ST for adjusting an amount of incident light. The diaphragm ST may be disposed between two lenses selected from the plurality of lenses 211, 212, 213, 214, and 215. For example, the diaphragm ST may be disposed on a circumference between the second lens 212 and the third lens 213 or a circumference between the first and second lenses 211 and 212. For example, the diaphragm ST may be disposed between the first lens group G1 and the second lens group G2. As another example, in the diaphragm ST, a circumferential surface of the object side surface or the image side surface of at least one of the plurality of lenses may function as a diaphragm. The diaphragm ST may function to adjust the amount of incident light.

The filter 292 may be disposed between the lens unit 210 and the image sensor 290. The filter 292 may include at least any one of optical filters such as an infrared filter and a cover glass. The filter 292 may pass through light in a set wavelength band and filter light in a different wavelength band. When the filter 292 includes the infrared filter, radiant heat emitted from external light can be blocked from being transmitted to the image sensor 290. In addition, the filter 292 may transmit visible light and reflect infrared rays.

The image sensor 290 may detect light passing through the filter 292 or the last lens and convert the light into an electrical signal. The image sensor 290 may detect light sequentially passing through the first lens to the fifth lens 211, 212, 213, 214, and 215. The image sensor 290 may include a charge coupled device (CCD), a complementary metal oxide semiconductor (CMOS), etc.

[Table 4]

| Lens | Surface | Radius of curvature (mm) | Thickness or distance (mm) | Curvature | Refractive index | Abbe's number |
|---|---|---|---|---|---|---|
| First lens | First surface | -28.0000 | 0.5865 | -0.035714 | 1.5368 | 55.6762 |
| | Second surface | -9.6693 | 0.2540 | -0.10342 | | |
| Second lens | Third surface | 3.7036 | 1.4500 | 0.2700095 | 1.5368 | 55.6762 |
| | Fourth surface | 8.5365 | 0.3902 | 0.1171443 | | |
| Third lens | Fifth surface | 12.8989 | 0.8389 | 0.0775261 | 1.6206 | 25.9493 |
| | Sixth surface | 2.6568 | 1.6104 | 0.3763986 | | |
| Fourth lens | Seventh surface | 3.6714 | 0.4500 | 0.272374 | 1.5368 | 55.6762 |
| | Eighth surface | 4.7256 | 0.3184 | 0.2116152 | | |
| Fifth lens | Ninth surface | 23.9483 | 0.5135 | 0.0417566 | 1.6206 | 25.9493 |
| | Tenth surface | -37.1044 | - | -0.026951 | | |

The object side surface refers to a thickness, and the image side surface refers to a distance from a next member.

[Table 5]

| Items | Another embodiment |
|---|---|
| TTL | 17.1999 |
| EFL | 17.1423 |
| BFL | 10.7879 |
| ImgH | 3.2000 |
| f1 | 27.2102 |
| f2 | 11.0304 |
| f3 | -5.5660 |
| f4 | 26.6816 |
| f5 | 23.5280 |
| Fno | 3.3612 |
| HFOV | 10.5000 |

Table 4 shows the radii of curvature of the first lens to the fifth lens 211, 212, 213, 214, and 215 according to another embodiment, the center thickness (mm) of each lens, the distance (mm) between the lenses, a curvature, a refractive index, and an Abbe's number. In addition, Table 5 shows a total track length (TTL), an effective focal length (EFL), a back focus length (BFL), and a focal length of the lens of the optical system according to another embodiment. In addition, an F number of the entire lens unit is 3 or more, for example, 3.3612. An angle (HFOV) viewed from the camera module may be 20 degrees or less, for example, in a range of 8 degrees to 15 degrees. Here, the angle (HFOV) viewed from the camera module is a half angle of view. Therefore, the angle (HFOV) may be 1/2 times the angle of view in the camera module.

Referring to Table 4, refractive indices of the first lens 211, the second lens 212, and the fourth lens 214 may be the same. In addition, the refractive indices of the first lens 211, the second lens 212, and the fourth lens 214 may be smaller than those of the third lens 213 and the fifth lens 215.

The Abbe's numbers of the first lens 211, the second lens 212, and the fourth lens 214 may be 50 or more and may be the same. In addition, the Abbe's numbers of the first lens 211, the second lens 212, and the fourth lens 214 may be larger than the Abbe's number of the third lens 213. In addition, the Abbe's number of the third lens 213 is smaller than 50 and may be the same as the Abbe's number of the fifth lens 215.

In addition, referring to Table 5, the EFL of the optical system may be smaller than the focal length f1 of the first lens 211. In addition, the EFL of the optical system may be smaller than the focal length f2 of the second lens 212.

[Table 6]

|  | Expression | Another embodiment |
|---|---|---|
| Expression 1 | 7<EFL<40 | Satisfied |
| Expression 2 | L1S1/L1S2<1 | Satisfied |
| Expression 3 | R_L1/R_L3<0.98 | Satisfied |
| Expression 4 | R_L5/R_L1<0.35 | Satisfied |
| Expression 5 | 0.1<TH_L1/TH_L2<1 | Satisfied |
| Expression 6 | |f1|>|f2|+|f3| | Satisfied |
| Expression 7 | 2<BFL/ImgH<7 | Satisfied |
| Expression 8 | 0.3 5<BFL/EFL<0.75 | Satisfied |
| Expression 9 | 1.5<TTL/BFL<2.5 | Satisfied |
| Expression 10 | 0.75<DL2/TTL<0.98 | Satisfied |
| Expression 11 | |f4|<|f5|<|f1| | Satisfied |
| Expression 12 | 1<TH_L1/d12<10 | Satisfied |
| Expression 13 | 0.5<f1/EFL<2 | Satisfied |
| Expression 14 | 0.5<L1S1 C.A/I.H<0.9 | Satisfied |
| Expression 15 | 0.5<f/f1<1 | Satisfied |

Table 6 shows result values of the optical system according to the embodiment for the above-described expressions. Referring to Table 6, it can be seen that the optical system according to another embodiment satisfies at least one or two or more among Expression 1 to Expression 15. In addition, in the optical system, the first lens to the fifth lens 211, 212, 213, 214, and 215 may have a circular shape. Alternatively, at least some of the first lens to the fifth lens may have a non-circular shape, for example, a shape having a flat side surface portion. For example, as described in the embodiment, some of the first lens to the third lens may have a non-circular shape. Therefore, the optical system can be implemented in a smaller size and provided in a compact form compared to the circular shape. In addition, when the optical system satisfies at least one of Expression 1 to Expression 15, it may be applied to a folded camera. Specifically, the optical system may include the optical member (e.g., a prism) and change light incident in a direction perpendicular to a surface of the applied device to a direction parallel to the surface of the device. Therefore, since the optical system including the plurality of lenses may have a smaller thickness within the device, the device may be provided to be thinner.

For example, at least one or two or more of the first lens to the fifth lens 211, 212, 213, 214, and 215 of the lens unit 210 may have the lengths in a direction perpendicular to in the second direction (X-axis direction) or the thickness direction of the portable device and the lengths in the first direction (Y-axis direction) or the thickness direction of the portable device, which are different from each other. For example, at least one or all of the first lens to the fourth lens 211, 212, 213, and 214 may have the lengths in the second direction (X-axis direction) smaller than the lengths in the first direction (Y-axis direction). The lenses 211, 212, and 213 of the first lens group may have the lengths in the second direction (X-axis direction) smaller than the lengths in the first direction (Y-axis direction). Here, the length of each of the lenses 211, 212, 213, 214, and 215 is a length of the clear aperture or the effective region.

The first lens to the fifth lens 211, 212, 213, 214, and 215 may have a clear aperture through which light transmits. For example, each of the first surface to the tenth surface S21, S22, S23, S24, S25, S26, S27, S28, S29, and S210 may have a set clear aperture.

In the embodiment, in the optical system 10C, at least one lens surface having the clear aperture with a larger size than the second surface S22, which is the image side surface of the first lens 211 may not be present. In other words, the clear aperture of the second surface S22 of the first lens 211 may be the largest in the optical system.

In addition, the lens surfaces of the second lens 212 to fifth lens 215 having the clear aperture with a larger size than the first surface S21, which is the object side surface of the first lens 211, may not be present. In other words, the clear aperture of the first surface S21 of the first lens 211 may be larger than the lens surfaces of the second lens 212 to the fifth lens 215.

In the embodiment, in the optical system 10C, both surfaces of the fourth lens 214 may be convex to the object side. The fourth lens 214 may have the object side surface S27 convex to the object side and the image side surface S28 convex to the object side.

In addition, in the optical system 10C, the fifth lens 215 may have the object side surface S29 convex to the object side and the image side surface S10 concave to the object side. Therefore, the object side surface S29 of the fifth lens 215 may have the same convex or concave shape as the image side surface S28 of the fourth lens 214. In this case, by setting the radius of curvature of the object side surface S29 of the fifth lens 215 to be larger than the radius of curvature of the image side surface S28 of the fourth lens 214, it is possible to suppress the occurrence of ghost or flare. Therefore, the optical system 10C according to the embodiment can also improve optical performance by suppressing the above-described occurrence of the flare.

In addition, the clear apertures may decrease in the order of the second surface S22, the first surface S21, the third surface S23, the fourth surface S24, the fifth surface S25, the eighth surface S28, the seventh surface S27, the sixth surface S26, the ninth surface S29, and the tenth surface S210 along the optical axis Lz.

The clear aperture of the second lens 212 may have a smaller size than the clear aperture of the first lens 211. For example, the third surface S23, which is the object side surface of the second lens 212, and the fourth surface S24, which is the image side surface of the second lens 112, may have smaller clear apertures than the first surface S21 and the second surface S22 of the first lens 211.

In addition, the size of the clear aperture of the fourth surface S24 may be the fourth largest next to the first surface S21 to the third surface S23 among the first surface to the eighth surface S21, S22, S23, S24, S25, S26, S27, and S28. In other words, the sizes of the clear apertures may be in the order of S22>S21>S23>S24. In addition, the size of the effective area may be S22>S21>S23>S24.

Furthermore, the fifth surface S25 and the sixth surface S26 of the third lens 213 may have smaller clear apertures than the surfaces of the first lens 211 and the second lens 212. In addition, the clear aperture of the fifth surface S25 may be larger than the clear aperture of the sixth surface S26.

In addition, in the embodiment, a ratio between the clear aperture of the first surface S21, which is the object side surface of the first lens 211, and the clear apertures of the object side surfaces or the image side surfaces of the second lens 212 to the fifth lens 215 may be in a range of 1:0.55 to 1:1.

In addition, the magnitude of the refractive power of the third lens 213 may be larger than the magnitude of the refractive power of any one of the first lens 211, the second lens 212, the fourth lens 214, and the fifth lens 215. In other words, the magnitude of the refractive power of the third lens 213 may be the largest in the optical system.

For example, the magnitude (absolute value) of the refractive power of each lens in the optical system 10C may decrease in the order of the third lens 213, the second lens 212, the fifth lens 215, the fourth lens 214, and the first lens 211. In this case, the magnitude of the refractive power of the second lens 212 may be smaller than or equal to the magnitude of the refractive power of the third lens 213. In addition, the magnitude of the refractive power of the second lens 212 may be larger than the magnitude of the refractive power of any one of the fourth lens 214, the fifth lens 215, and the first lens 211.

In addition, when the radius of curvature is an absolute value, the radius of curvature of the sixth surface S26, which is the object side surface of the third lens 213, may be the smallest among the first lens 211 to the fifth lens 215.

In addition, the radius of curvature of the tenth surface S210, which is the image side surface of the fifth lens 215, may be the largest among the first lens 211 to the fifth lens 215.

In the embodiment, a separation distance (corresponding to the above-described "interval") between the third lens 213 and the fourth lens 214 may be the largest among separation distances between adjacent lenses in the optical system. In addition, the separation distance between the third lens 213 and the fourth lens 214 may be larger than a separation distance between the second lens 212 and the third lens 213. In addition, the separation distance between the second lens 212 and the third lens 213 may be larger than a separation distance between the fourth lens 214 and the fifth lens 215 or a separation distance between the first lens 211 and the second lens 212.

Furthermore, as described above, Abbe's numbers of the first lens 211, the second lens 212, and the fourth lens 214 may be 50 or more and may be the same. In addition, the Abbe's numbers of the first lens 211, the second lens 212, and the fourth lens 214 may be larger than the Abbe's number of the third lens 213. In addition, the Abbe's number of the third lens 213 is smaller than 50 and may be the same as the Abbe's number of the fifth lens 215.

In addition, in the embodiment, at least one of the first lens 211, the second lens 212, and the third lens 213 may have a maximum length in the first direction (Y-axis direction) larger than a maximum length in the second direction (X-axis direction).

As described above, although it has been described that the effective regions of the first surface S21 to the fifth surface S25 have a non-circular shape, the present invention is not limited thereto, and the effective region of each of the first surface S21 to the fifth surface S25 may have a circular shape, and the non-effective region of each of the first surface S21 to the fifth surface S25 may have a non-circular shape. In addition, In the case of the non-circular shape, the first lens 211, the second lens 212, and the third lens 213 may have the same maximum length in the second direction (X-axis direction). For example, the first surface S21 to the fifth surface S25 may have the same maximum length in the second direction (X-axis direction).

In addition, in the optical system 10C according to the embodiment, at least one of the fourth lens 214 and the fifth lens 215 may have an inflection point on the object side surface. Therefore, it is possible to suppress a flare phenomenon of light passing through the fourth lens and the fifth lens.

Referring to FIG. 10, a longitudinal spherical aberration is a spherical aberration according to each wavelength, an astigmatic field curve means aberration characteristics of a tangential plane and a sagital plane according to a height of the image surface, and a distortion means a degree of distortion according to the height of the image surface. As illustrated in FIG. 7, regardless of a wavelength in the optical system according to the embodiment, it can be seen that the longitudinal spherical aberration is in a range of -0.08 mm to 0.08 mm, it can be seen that the astigmatic field curve is in a range of -0.05 mm to 0.05 mm, and it can be seen that the distortion is in a range of -0.05 mm to 0.05 mm.

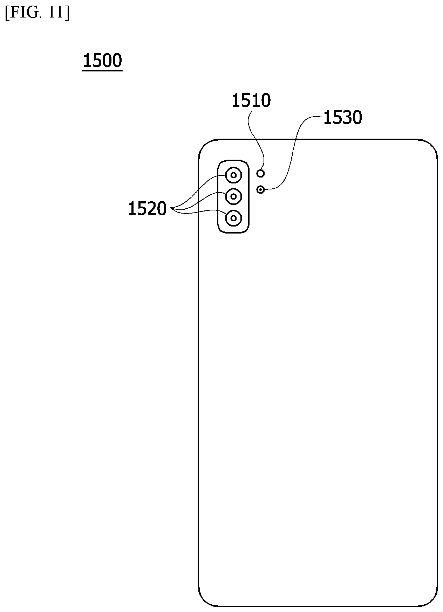

FIG. 11 shows an example of a camera module having the optical system according to the embodiment of the present invention.

As illustrated in FIG. 11, a mobile terminal 1500 may include a camera module 1520, a flash module 1530, and an AF device 1510, which are provided on one surface or a rear surface thereof. The camera module 1520 may include the camera module 1000 illustrated in FIGS. 2 and 3. In addition, a plurality of camera modules 1520 may be provided. For example, the number of camera modules may be 1 to 4 or 5 or more. Furthermore, the plurality of camera modules may include all camera modules for performing OIS and/or AF or driven without OIS/AF. In addition, a plurality of camera modules may provide different magnifications.

In addition, the AF device 1510 may include a surface light-emitting laser device and a light receiver as a light-emitting layer.

The flash module 1530 may include an emitter for emitting light therein. The flash module 1530 may be operated by an operation of a camera of a mobile terminal or a user's control. The camera module 1520 may include an image capturing function and an AF function. For example, the camera module 1520 may include the AF function using an image.

The AF device 1510 may include an AF function using a laser. The AF device 1510 may be mainly used in a condition in which the AF function using the image of the camera module 1520 is degraded, for example, in an environment that is close to 10 m or less or dark.

Although embodiments have been mainly described above, these are only illustrative and do not limit the present invention, and those skilled in the art to which the present invention pertains can know that various modifications and applications not exemplified above are possible without departing from the essential characteristics of the embodiments. For example, each component specifically illustrated in the embodiments may be implemented by modification. In addition, differences related to these modifications and applications should be construed as being included in the scope of the present invention defined in the appended claims.

**Claims**

1. An optical system comprising a first lens group and a second lens group sequentially disposed from an object side to an image side,

   wherein the first lens group includes a first lens to a third lens,
   wherein the second lens group includes a fourth lens and a fifth lens,
   wherein the first lens is closest to the object side and has a concave object side surface, and
   wherein the fifth lens is closest to the image side and has a convex image side surface.

2. The optical system of claim 1, wherein the fourth lens has a convex object side surface and a concave image side surface.

3. The optical system of claim 1, wherein a distance on an optical axis between a lens of the first lens group, which is closest to the image side, and a lens of the second lens group, which is closest to the object side, is the largest.

4. An optical system comprising a first lens to a fifth lens sequentially disposed from an object side to an image side,

   wherein the first lens is closest to the object side and has a concave object side surface,
   wherein the fifth lens is closest to the image side and has a convex image side surface, and
   wherein a distance between the third lens and the fourth lens based on an optical axis is the largest.

5. An optical system comprising a first lens to a fifth lens sequentially disposed from an object side to an image side,

   wherein the first lens is closest to the object side and has a concave object side surface,
   wherein the fifth lens is closest to the image side and has a convex image side surface, and
   wherein the fourth lens has a convex object side surface and a concave image side surface.

6. An optical system comprising a first lens to a fifth lens sequentially disposed from an object side to an image side,

   wherein the first lens and the second lens have positive refractive power,
   wherein the third lens has negative refractive power,
   wherein the fourth lens and the fifth lens have positive refractive power,
   wherein the first lens is closest to the object side, and
   wherein the fifth lens is closest to the image side.

7. The optical system of claim 6, wherein a distance between the third lens and the fourth lens based on an optical axis is the largest among distances between other lenses closest to each other, and
   wherein the fourth lens is disposed on the image side of the third lens and is closest to the third lens.

8. A camera module comprising:

   the optical system of claim 1; and
   an image sensor disposed at a rear end of the fifth lens.

9. The camera module of claim 8, comprising a filter disposed between the fifth lens and the image sensor.

10. The camera module of claim 9, comprising a dummy member disposed between the fifth lens and the filter.

11. The camera module of claim 8, comprising a reflective member disposed in front of the first lens.

12. An optical system comprising a first lens group and a second lens group sequentially disposed from an object side to an image side,

   wherein the first lens group includes a first lens to a third lens sequentially disposed from the object side to the image side,
   wherein the second lens group includes a fourth lens and a fifth lens sequentially disposed from the object side to the image side,
   wherein the first lens has an object side surface concave to the object side,
   wherein the fourth lens has a convex object side surface and a concave image side surface, and
   wherein the fifth lens has a convex image side surface.

13. The optical system of claim 1, wherein a center thickness of the fifth lens is larger than a distance between the fourth lens and the fifth lens.

14. The optical system of claim 1, wherein the fifth lens has an absolute value of a radius of curvature of the image side surface that is larger than an absolute value of a radius of curvature of an object side surface.

**15.** The optical system of claim 1, wherein an Abbe's number of the fifth lens is larger than 24.

**16.** The optical system of claim 1, wherein a focal length of the first lens is larger than a focal length of the fifth lens.

**17.** The optical system of claim 1, wherein a focal length of the fourth lens is larger than a focal length of the fifth lens.

**18.** The optical system of claim 1, wherein the fifth lens has a concave object side surface.

**19.** The optical system of claim 1, wherein a distance on an optical axis between an image side surface of the third lens and an object side surface of the fourth lens is larger than a sum of a thickness on the optical axis of the fourth lens and a thickness on the optical axis of the fifth lens.

**20.** The optical system of claim 1, wherein a distance on an optical axis between an image side surface of the third lens and an object side surface of the fourth lens is larger than a half of a difference between a size of the third lens and a size of the fourth lens in a direction perpendicular to the optical axis.

[FIG. 1]

[FIG. 2]

1000

CV

A

A'

X
Z
Y

[FIG. 3]

PATH

1100    1200    1300

A'    CV    A'

10A

X

Y    Z

[FIG. 4]

[FIG. 5]

- - - - - 656.3000 NM    ———— 546.0000 NM    ———— 435.0000 NM

————— 587.0000 NM    · · · · · 486.0000 NM

LONGITUDINAL SPHERICAL ABER.

ASTIGMATIC FIELD CURVES

DISTORTION

[FIG. 6]

[FIG. 7]

[FIG. 8]

[FIG. 9]

<u>10C</u>

[FIG. 10]

EP 4 332 655 A1

- - - - - 656.3000 NM   ———— 546.0000 NM   ———— 435.0000 NM
—·——·— 587.0000 NM   · · · · · 486.0000 NM

LONGITUDINAL
SPHERICAL ABER.

ASTIGMATIC
FIELD CURVES

DISTORTION

FOCUS (MILLIMETERS)

FOCUS (MILLIMETERS)

% DISTORTION

[FIG. 11]

1500

1510

1530

1520

<table>
<tr><td colspan="2" align="center">**INTERNATIONAL SEARCH REPORT**</td><td>International application No.<br>**PCT/KR2022/005918**</td></tr>
</table>

**A.    CLASSIFICATION OF SUBJECT MATTER**

**G02B 15/14**(2006.01)i; **G02B 13/00**(2006.01)i; **G02B 3/00**(2006.01)i; **G02B 9/60**(2006.01)i; **G03B 17/12**(2006.01)i; **H04N 5/225**(2006.01)i

According to International Patent Classification (IPC) or to both national classification and IPC

**B.    FIELDS SEARCHED**

Minimum documentation searched (classification system followed by classification symbols)

G02B 15/14(2006.01); G02B 13/00(2006.01); G02B 13/02(2006.01); G02B 13/04(2006.01); G02B 13/18(2006.01); G02B 15/16(2006.01); G02B 27/64(2006.01); G02B 7/02(2006.01); G02B 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제2 렌즈군(second lens group), 제5렌즈(fifth lens), 굴절력(refractive index), 초점거리(focal distance)

**C.    DOCUMENTS CONSIDERED TO BE RELEVANT**

| Category* | Citation of document, with indication, where appropriate, of the relevant passages | Relevant to claim No. |
|---|---|---|
| X<br><br>Y | JP 2001-166207 A (KONICA CORP.) 22 June 2001 (2001-06-22)<br>    See paragraph [0002], tables 23 and 24 and figure 23. | 1-5,12,14,15,18-20<br><br>8-11,13,16,17 |
| Y | JP 2010-107532 A (FUJINON CORP.) 13 May 2010 (2010-05-13)<br>    See figure 8. | 13 |
| Y | JP 2021-033302 A (AAC OPTICS SOLUTIONS PTE LTD.) 01 March 2021 (2021-03-01)<br>    See table 13 and figure 1. | 16,17 |
| X | JP 09-218348 A (MINOLTA CO., LTD.) 19 August 1997 (1997-08-19)<br>    See paragraph [0008] and figure 1. | 6,7 |
| Y | WO 2020-141902 A1 (LG INNOTEK CO., LTD.) 09 July 2020 (2020-07-09)<br>    See paragraphs [0057] and [0058] and figure 1. | 8-11 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **05 August 2022** | **09 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/005918**

| Patent document cited in search report | | | Publication date (day/month/year) | Patent family member(s) | | | Publication date (day/month/year) |
|---|---|---|---|---|---|---|---|
| JP | 2001-166207 | A | 22 June 2001 | CN | 1182415 | C | 29 December 2004 |
| | | | | CN | 1274858 | A | 29 November 2000 |
| | | | | EP | 1054280 | A2 | 22 November 2000 |
| | | | | EP | 1054280 | A3 | 18 August 2004 |
| | | | | TW | 475066 | A | 01 February 2002 |
| | | | | TW | 475066 | B | 01 February 2002 |
| | | | | US | 6404562 | B1 | 11 June 2002 |
| JP | 2010-107532 | A | 13 May 2010 | CN | 201503514 | U | 09 June 2010 |
| | | | | TW | M362997 | A | 11 August 2009 |
| | | | | TW | M362997 | U | 11 August 2009 |
| | | | | US | 2010-0103539 | A1 | 29 April 2010 |
| | | | | US | 7903349 | B2 | 08 March 2011 |
| JP | 2021-033302 | A | 01 March 2021 | CN | 110515182 | A | 29 November 2019 |
| | | | | CN | 110515182 | B | 08 January 2021 |
| | | | | JP | 6896923 | B2 | 30 June 2021 |
| | | | | US | 2021-0055523 | A1 | 25 February 2021 |
| | | | | WO | 2021-031236 | A1 | 25 February 2021 |
| JP | 09-218348 | A | 19 August 1997 | EP | 0789259 | A2 | 13 August 1997 |
| | | | | EP | 0789259 | A3 | 19 November 1997 |
| | | | | JP | 09-218346 | A | 19 August 1997 |
| | | | | JP | 09-218348 | A | 19 August 1997 |
| | | | | JP | 09-218349 | A | 19 August 1997 |
| | | | | JP | 09-236742 | A | 09 September 1997 |
| | | | | JP | 09-236743 | A | 09 September 1997 |
| | | | | US | 2002-0005851 | A1 | 17 January 2002 |
| | | | | US | 6512633 | B2 | 28 January 2003 |
| WO | 2020-141902 | A1 | 09 July 2020 | CN | 113287048 | A | 20 August 2021 |
| | | | | KR | 10-2020-0085205 | A | 14 July 2020 |
| | | | | US | 2022-0113491 | A1 | 14 April 2022 |

Form PCT/ISA/210 (patent family annex) (July 2019)